(19) Europäisches Patentamt

European Patent Office

Office européen des brevets

(11) **EP 1 158 267 B1**

(12) **FASCICULE DE BREVET EUROPEEN**

(45) Date de publication et mention
de la délivrance du brevet:
**21.09.2005 Bulletin 2005/38**

(51) Int Cl.⁷: **G01B 11/02**, G01B 11/04,
G01B 11/24, G01B 11/30,
G01N 21/892, B21C 51/00,
B21B 37/00

(21) Numéro de dépôt: **00974833.6**

(22) Date de dépôt: **08.11.2000**

(86) Numéro de dépôt international:
**PCT/JP2000/007853**

(87) Numéro de publication internationale:
**WO 2001/035050 (17.05.2001 Gazette 2001/20)**

(54) **MESURER LA QUALITE D'UN CORPS EN FORME DE BANDE AVEC UN MOYEN DE PRISE D'IMAGES, REDUCTION DE CAMBRAGE ET ONDULATION, LAMINAGE, EBARBAGE**

MESSEN DER QUALITÄT VON BANDFÖRMIGEM MATERIAL MIT EINEM BILDAUFNAHMEGERÄT, VERMINDERUNG VON KRÜMMUNG UND WELLIGKEIT, WALZEN, ENTGRATEN

MEASURING QUALITY OF BANDLIKE BODY WITH A DEVICE TAKING PICTURES, REDUCTION OF CAMBER AND UNDULATION, ROLLING, DEBURRING

(84) Etats contractants désignés:
**FR**

(30) Priorité: **08.11.1999 JP 31704499**
**29.03.2000 JP 2000092247**
**07.11.2000 JP 2000339677**

(43) Date de publication de la demande:
**28.11.2001 Bulletin 2001/48**

(73) Titulaire: **SUMITOMO METAL INDUSTRIES, LTD.**
**Osaka 541-0046 (JP)**

(72) Inventeurs:
• **ISHIHARA, Humitaka**
**Sumitomo Metal Industries Ltd.**
**Osaka-shi, Osaka 541-0046 (JP)**
• **KURIHARA, Shigeyuki**
**Sumitomo Metal Industries Ltd.**
**Osaka-shi, Osaka 541-0046 (JP)**

• **NOGAMI, Shinichi**
**Sumitomo Metal Industries Limited**
**Osaka-shi, Osaka 541-0046 (JP)**
• **HORIKAWA, Hideo**
**Sumitomo Metal Industries Limited**
**Osaka-shi, Osaka 541-0046 (JP)**

(74) Mandataire: **Uchida, Kenji et al**
**S.A. Fedit-Loriot et Autres**
**Conseils en Propriété Industrielle**
**38, avenue Hoche**
**75008 Paris (FR)**

(56) Documents cités:
| | |
|---|---|
| **JP-A- 5 157 549** | **JP-A- 7 019 830** |
| **JP-A- 8 094 333** | **JP-A- 9 304 035** |
| **JP-A- 9 304 296** | **JP-A- 52 244 656** |
| **JP-A- 58 068 605** | **JP-A- 61 046 310** |

## Description

Domaine de l'invention

La présente invention concerne un procédé pour mesurer la largeur, l'ondulation latérale et le cambrage d'une matière sous forme de bande, par exemple une tôle d'acier, en utilisant des images prises sur cette matière. L'invention concerne aussi un procédé de mesure de qualité de la matière, afin de détecter des manques de bord latéral et des défauts de surface de cette matière, et un procédé de réduction de cambrage, afin de réduire le cambrage de la matière formé lors d'un laminage et d'un ébarbage. L'invention concerne, de même, un dispositif pour la mesure de qualité, pour le laminage et pour l'ébarbage, afin de réaliser le procédé de mesure de qualité précité. Revendications 1, 7, 8, 9, 13, 14.

Etat de la technique

Une matière sous forme de bande, par exemple une tôle d'acier, subit une variation de sa largeur et/ou un cambrage (ondulation longitudinale des bords latéraux d'une tôle) pendant sa production. Il devient donc nécessaire d'ébarber les deux bords latéraux de la tôle pour avoir les bords latéraux droits. Par ce fait, lorsque le cambrage est important, l'ébarbage devient coûteux, et le rendement de la tôle baisse. En outre, lorsque la tôle est gondolée pendant le laminage, son épaisseur sur la largeur devient irrégulière. Il devient ainsi nécessaire de mesurer le cambrage de la tôle au cours de son acheminement sur une ligne de production, et de régler le taux de réduction et la traction en fonction des résultats de mesures obtenus, afin d'améliorer la qualité du produit.

Un procédé de mesure automatique du cambrage d'une tôle au cours de l'acheminement a déjà fait l'objet d'un brevet délivré Hei 6-1186 (JP-A-63-066 409) sous le titre "Procédé de comparaison et de rectification, sur la base des mesures de courbure d'un produit long". Ce procédé permet de mesurer la distance depuis trois points de repère jusqu'aux bords latéraux de la tôle. Ce procédé a l'avantage de pouvoir mesurer précisément le cambrage ayant une périodicité spécifique.

Par ailleurs, la demande de brevet publiée sous le numéro Hei 5-157 549 divulgue un procédé, selon lequel le cambrage est mesuré par deux groupes d'au moins trois capteurs pour détecter la position des bords, installés le long de la direction longitudinale de la tôle. Il est ainsi possible de mesurer le cambrage de façon précise, et indépendamment de la périodicité.

Or, pour obtenir un produit de qualité, il est nécessaire de mesurer non seulement le cambrage, mais aussi l'ondulation latérale et la largeur de la tôle. Par ailleurs, le cambrage peut parfois occasionner la formation de défauts de surface tels que des plis, rendant ainsi souhaitable la détection de ces défauts de surface.

Les informations concernant le cambrage, l'ondulation latérale, la largeur et les défauts de surface de une tôle sont définies infra comme "informations sur les mesures de qualité".

Les informations sur les mesures de qualité d'une tôle ont été obtenues dans le passé par les moyens suivant.

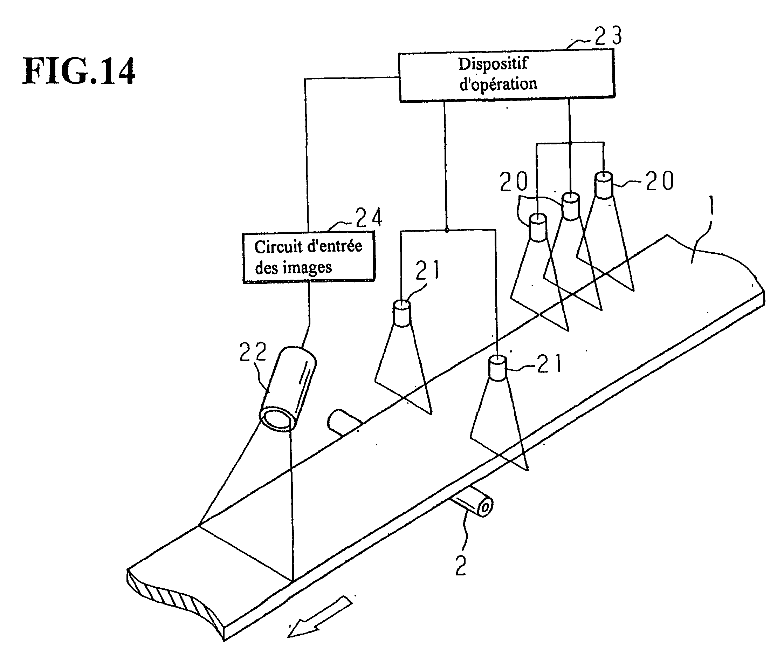

La figure 14 montre les constituants, par unités, d'un dispositif connu pour obtenir les informations sur les mesures de qualité d'une tôle. Comme il est montré dans cette figure, une tôle 1 est acheminée par un rouleau 2 à une vitesse donnée dans la direction longitudinal. Des capteurs 20, 20, 20 pour détection de la position des bords sont alignés au-dessus d'un des bords de la tôle placé en arrière de la direction de acheminement de la tôle, afin de mesurer le degré de cambrage et d'ondulation latérale. Plus en avant sont montés, au-dessus des deux bords de la tôle, des capteurs 21, 21 pour détecter la position des bords, afin de mesurer la largeur de la tôle. Encore plus en avant est installée une vidéo caméra 22 pour prendre des images afin de détecter les défauts de surface de la tôle 1.

Les trois capteurs pour détecter la position des bords 20, 20, 20 permettent de mesurer la distance entre les points de repère spécifiques et les bords latéraux de la tôle. Les distances mesurées sont entrées dans un moyen de calcul opérationnel 23. Ce dernier calcule les positions relatives de ces trois points de repère sur la base des distances obtenues. Le degré de cambrage et d'ondulation latérale de la tôle 1 est ensuite calculé en fonction desdites positions relatives.

Le moyen de calcul opérationnel 23 calcule la largeur de la tôle 1 sur la base des signaux relatifs aux distances des deux bords latéraux de la tôle, entrés via les deux capteurs 21, 21 pour détecter la position des bords. Les défauts de surface de la tôle 1 sont analysés sur la base des images captées par la vidéo caméra 22 et transmises via un circuit d'entrée des images 24.

Les informations sur les mesures de qualité ont ainsi été obtenues en employant plusieurs capteurs de détection de la position des bords et une vidéo caméra.

Cependant, puisque ces appareils connus sont constitués par de nombreux capteurs et vidéo caméras, ils occupent une espace considérable.

Par ailleurs, afin d'éviter la formation du cambrage et des défauts, on peut envisager de prendre des mesures aux deux moments différents de la procédure: lors du laminage de la tôle, ou lors de l'ébarbage de celle-là.

Le premier cas est divulgué dans le brevet japonais délivré sous No Hei 6-65404 (JP-A-61-046 310), dans lequel l'évolution chronologique du serrage du laminoir aux côtés de l'opérateur et de l'entraînement pendant le laminage est enregistrée et calculée, afin d'obtenir le degré du cambrage, et de définir ainsi les conditions du laminage pour la passe suivante.

Cependant, ce procédé, ayant recours à une mesure indirecte s'appuyant sur le serrage du laminoir, est assujetti à des erreurs et des fluctuations d'épaisseur (environ 3 à 9 mm). De plus, l'allongement de la tôle pendant le laminage cause une déviation dans les informations pour régler le cambrage (décalage dans le captage de la position). Il est par conséquence difficile de capter et régler une variation en cambrage qui ne dépasse pas 3 mm.

Le procédé selon le second cas supra tend à former le cambrage de la tôle, suite à l'ondulation latérale qui est due au bobinage de tôle mal fait autour d'un dérouleur, ou due aux variations sur le degré de jeu et de recouvrement de la lame d'ébarbage, ces variations étant créées par les fluctuations en résistance au cisaillement qui proviennent de la différence en épaisseur sur la largeur de la tôle et sa variation sur sa longueur: le réglage et la suppression de ce cambrage sont difficiles à réaliser.

Lorsque l'on utilise un dispositif pour régler l'ondulation latérale tel qu'un régulateur de la position des bords (Edge Position Controller, soit "EPC"), un tel réglage est effectué sur la base du cambrage des bords de la tôle avant l'ébarbage. Il reste donc le problème du cambrage formé après l'ébarbage.

Il y a aussi JP-A-58-068 605 avec un moyen de prise d'images.

La présente invention a été conçue en vue de résoudre ces problèmes. L'invention a donc l'objet de fournir un procédé de mesure de la qualité, selon lequel la largeur, l'ondulation latérale et le cambrage d'une matière sous forme d'une bande au cours de l'acheminement peuvent être calculés simultanément avec une haute précision, ainsi qu'un dispositif de mesure de la qualité pour réaliser ce procédé.

Un autre objet de l'invention est de fournir un procédé permettant de réduire le cambrage en réglant, par une commande à action directe "FF", le décalage en ondulation latérale et en cambrage d'une matière sous forme d'une bande, le décalage étant mesuré côté opérateur et côté entraînement, ainsi qu'un dispositif de laminage pour réaliser ce but.

La présente invention a aussi pour but de fournir un procédé de réduction de cambrage et un dispositif à ébarbage , ces procédé et dispositif permettant de régler, lors de l'ébarbage, l'ondulation latérale par une commande à action directe "FF", en fonction de l'ondulation latérale et du cambrage mesurés, et de supprimer ainsi la formation du cambrage sur la matière sous forme d'une bande.

Description de l'invention

Les présents inventeurs ont mesuré, au cours de l'acheminement d'une matière (tôle ci-après), les distances entre chacun de plusieurs points de mesure pris sur les bords latéraux de la tôle, d'une part, et une ligne de repère définie le long de chaque bord latéral de la tôle, de l'autre, puis ont mesuré les distances correspondantes après que la tôle a été déplacée sur un trajet donné, et ont comparé les résultats de chaque mesure. Les inventeurs ont ainsi trouvé que l'on peut mesurer l'ondulation latérale, le cambrage et la largeur de la tôle simultanément avec des moyens de prise des images moins nombreux. Sur la base des ces résultats, les inventeurs ont mis au point un procédé pour mesurer la qualité d'une tôle, un procédé pour supprimer le cambrage, ainsi qu'un dispositif pour mesurer la qualité, un dispositif de laminage et un dispositif d'ébarbage pour réaliser ledit procédé pour la mesure de qualité.

Le procédé de mesure de qualité d'une tôle selon le premier aspect de l'invention utilise un moyen de prise des images, par lequel des images prises sur la tôle au cours de son acheminement sont enregistrées à intervalle donnée. L'ondulation latérale et le cambrage de la tôle sont ensuite calculés à partir d'une pluralité d'images ainsi prises. Ce procédé est caractérisé en ce qu'il comprend: une étape, à laquelle est calculée la distance allant de chacun des points de mesure sur chaque bord latéral de la tôle, saisis dans les images, jusqu'à une ligne de repère définie le long de chaque bord latéral de la tôle; une étape à laquelle est détectée la différence entre la distance pour chaque point de mesure et la distance correspondante après l'acheminement de la tôle d'un trajet donné; une étape à laquelle l'ondulation latérale est calculée sur la base de la différence; et une étape à laquelle le cambrage de la tôle est calculé sur la base de l'ondulation latérale.

Le procédé de mesure de la qualité selon le second aspect de l'invention est caractérisé en ce qu'il comprend, concernant le premier aspect de l'invention:

une étape pour calculer le décalage des points de mesure selon la formule représentée par:

$$R_{1\sim n} = L_{1\sim n} \times \{(La_{n-1} - La_n) - (Lb_1 - Lb_2)\} / L$$

dans laquelle

n: nombre de points de mesure dans la première image prise;

$R_{1\sim n}$: décalage de chaque point de mesure causé par l'acheminement oblique de la matière sous forme d'une bande;

$L_{1\sim n}$: longueur comprise entre le point de mesure placé le plus en avant dans la première image et chacun des autres points de mesure, la longueur étant mesurée le long de la longueur de la matière et $L_1$ étant zéro;

L: cadence de mesure;

$La_{n-1}$: la distance du bord mesurée pour le $(n-1)^{\text{ème}}$ point de mesure dans la première image;

$La_n$: la distance du bord mesurée pour le $n^{\text{ème}}$ point de mesure dans la première image;

une étape pour calculer l'ondulation latérale sur la base de la formule représentée par:

$$D_{1\sim n} = Lb_1 - La_{n-1} - R_{1\sim n}$$

dans laquelle:

D$_{1\sim n}$ : ondulation latérale pour chaque point de mesure;
Lb$_1$: la distance du bord pour le point de mesure placé le plus en avant dans une seconde image de la matière, la seconde image étant positionnée plus en arrière de l'acheminement de la matière par rapport à la première image; et

une étape pour calculer le cambrage selon la formule représentée par:

$$C_{i+n-1 \sim i+2(n-1)} = Lb_{1\sim n} - D_{1\sim n}$$

dans laquelle:

i: nombre de points de mesure pour le cambrage, i étant zéro ou un nombre entier.
Lb$_{1\sim n}$: la distance du bord pour chaque point de mesure dans la seconde image.

Le procédé de mesure de la qualité selon le troisième aspect de l'invention est caractérisé en ce qu'il comprend, concernant le premier ou le second aspect de l'invention:

une étape pour calculer la distance du bord pour chaque point de mesure placé sur chacun des bords latéraux, la distance du bord étant mesurée à partir de la ligne de repère correspondante; et
une étape pour calculer la largeur de la matière selon la formule représentée par:

$$W = L - (Lc + Ld)$$

dans laquelle:

L: espace entre les deux lignes de repère qui s'étendent le long de chacun des bords latéraux correspondant de la matière;
Lc: mesure entre un point donné sur un premier bord et la première ligne de repère correspondante;
Ld: mesure entre un point donné sur le second bord, et la seconde ligne de repère correspondante, le point de mesure du premier bord et celui du second bord étant placées sur la même ligne perpendiculaire à la direction de l'acheminement de la matière.

Le procédé de mesure de la qualité selon la quatrième aspect de l'invention est caractérisé en ce que le moyen de prise des images, concernant un quelconque des premier, second et troisième aspects de l'invention, a une vitesse obturatrice VS et une luminance LX satisfaisant la formule représentée par:

$$VS >= \{(VL \times 1000)/60\} \times \{1/(SL/Kv)\}$$

$$Kv >= 10$$

$$LX = KL \times VS$$

dans laquelle

Kv: étendue dans laquelle la précision a été vérifiée (coefficient); et
KL: coefficient de conversion (Lx/Hz) allant de 5.0 à 7.0.

Le procédé de mesure de la qualité selon le cinquième aspect de l'invention est caractérisé en ce qu'il comprend en plus, concernant un quelconque des premier, second, troisième et quatrième aspects de l'invention, une étape pour détecter des manques ou ébréchures de bord de la matière sur la base de la mesure obtenue.

Le procédé de mesure de la qualité selon la sixième aspect de l'invention est caractérisé en ce qu'il comprend, concernant un quelconque du premier au cinquième aspects de l'invention, une étape pour détecter des défauts de surface de la matière sur la base de la valeur de la luminance des pixels dans les images prises.

Le procédé pour réduire le cambrage selon le septième aspect de l'invention concerne la méthode pour supprimer la formation du cambrage en réglant, par commande à rétroaction "FB", des écarts des cylindres entre le côté opérateur et le côté entraînement, et est caractérisé en ce qu'il comprend une étape pour obtenir; par le procédé de mesure de la qualité de la matière selon un quelconque des premier au quatrième aspects de l'invention, l'ondulation latérale et le cambrage de la matière à l'entrée du laminoir du côté opérateur et du côté entraînement, une étape de calcul des valeurs pour corriger l'écart des cylindre du côté opérateur et du côté entraînement, effectué sur la base de l'ondulation latérale et du cambrage, et une étape d'ajout de ces valeurs pour corriger l'écart de cylindres aux valeurs de l'écart de consigne du côté opérateur et du côté entraînement des cylindres.

Le procédé de la réduction du cambrage selon le huitième aspect de l'invention concerne la méthode pour supprimer la formation du cambrage et de l'ondulation latérale de la matière par commande à rétroaction "FB" lors de l'ébarbage des ses bords latéraux, et caractérisé en ce qu'il comprend une étape pour obtenir, par le procédé de mesure de la qualité de la matière selon un quelconque des premier au quatrième aspects de l'invention, l'ondulation latérale et le cambrage sur un bord ou sur deux bords de la matière, une étape pour calculer une marge à ébarber sur la base de l'ondulation latérale , du cambrage et d'une largeur de la matière visée, et une étape de calcul de la valeur de consigne pour la régulation de l'ondulation latérale sur la base de la marge à ébarber.

Le dispositif de mesure de la qualité selon le neuvième aspect de l'invention comprend un ou plusieurs moyen(s) de prise des images de la matière au cours de son acheminement à chaque intervalle donnée, si bien que l'ondulation latérale et le cambrage peuvent être calculés sur la base des plusieurs images prises par ce moyen, et ce dispositif de l'invention est caractérisé en ce qu'il comprend un moyen de calcul de la distance du bord allant de chacun des points de mesure pris sur les bords latéraux de la matière apparus dans les images prises, jusqu'aux lignes de repère définies sur la longueur de la matière, un moyen de la détection de différence qui compare la distance du bord calculée par le moyen et celle calculée après que la matière a été acheminée d'une longueur prédéterminée, un moyen de calcul de l'ondulation latérale permettant de calculer celui-ci sur la base de la différence des distances du bord, et un moyen de calcul du cambrage permettant de calculer celui-ci sur la base de l'ondulation latérale obtenue par le moyen pré-cité.

Le dispositif de mesure de qualité selon le dixième aspect de l'invention concerne le neuvième aspect de l'invention, et comprend un moyen permettant de calculer la distance du bord allant de chacun des points de mesure choisis sur chaque bord latéral de la matière, jusqu'à une ligne de repère définie le long de chaque côté de la matière, et un moyen permettant de calculer la largeur de la matière sur la base de mesure comprise entre un point sur chaque bord et la ligne de repère correspondante, les points de mesure étant placés sur une ligne perpendiculaire à la direction de l'acheminement de la matière.

Le dispositif de mesure de la qualité selon le onzième aspect de l'invention concerne le neuvième ou dixième aspect de l'invention, et est caractérisé en ce qu'il comprend un moyen permettant de détecter des manques ou ébréchures occasionnées sur les bords latéraux de la matière sur la base de la distance du bord calculée par le moyen de calcul de la distance.

Le dispositif de mesure de la qualité selon le douzième aspect de l'invention concerne un quelconque des neuvième à l'onzième aspects de l'invention, et est caractérisé en ce qu'il comprend un moyen permettant de détecter des défauts de surface de la matière sur la base des valeurs de la luminance des pixels apparus dans les images prises.

Le dispositif de laminage selon le treizième aspect de l'invention concerne un dispositif de laminage permettant de régler l'écart des cylindres du côté opérateur et du côté entraînement par une commande à rétroaction "FB", et est caractérisé en ce qu'il comprend le dispositif de mesure de la qualité de tôle selon le neuvième ou le dixième aspect de l'invention, un moyen pour intégrer l'ondulation latérale et le cambrage de la matière du côté opérateur et du côté entraînement à l'entrée des cylindres, obtenus par ce dispositif, un moyen de calcul des valeurs pour corriger l'écart des cylindres entre le côté opérateur et le côté entraînement, calculé sur la base de l'ondulation latérale et du cambrage obtenus, et un moyen d'ajouter ces valeurs pour corriger l'écart des cylindre, à la valeur de l'écart de cylindres de consigne pour le côté opérateur et pour le côté entraînement.

Le dispositif d'ébarbage selon le quatorzième aspect de l'invention concerne le dispositif permettant de régler l'ondulation latérale de la matière par commande à rétroaction "FB" et d'ébarber les deux bords latéraux de la matière, et est caractérisé en ce qu'il comprend le dispositif de mesure de la qualité de matière selon le neuvième ou le dixième aspect de l'invention, un moyen pour incorporer l'ondulation latérale et le cambrage de la matière sur un bord latéral ou sur les deux bords latéraux, obtenus par ce dispositif supra, dans le système de réglage, un moyen pour calculer les marges à ébarber sur la base de l'ondulation latérale, du cambrage, ainsi que de la largeur de tôle visée, et un moyen pour calculer la valeur de consigne "EPC" pour régler la position de bord, sur la base des marges à ébarber.

Selon le premier et le neuvième aspects de l'invention, la matière sous forme d'une bande au cours de l'acheminement est filmée par un moyen de prise des images à intervalle donnée, et on calcule la distance du bord allant de chacun des points positionnés sur chaque bord latéral de la matière et apparus dans les images obtenues, jusqu'à la ligne de repère correspondante, définie le long de chaque bord de la matière. Ensuite, la distance du bord concernant les points de mesure dans les images prises en avant, puis celle en arrière, sont comparées, et la différence en distance entre ces deux phases (avant, arrière) est ainsi détectée. L'ondulation latérale de la matière est calculée sur la base de cette différence, puis le cambrage de la tôle est calculé sur la base de cette ondulation latérale calculée.

En utilisant les images prises par le moyen de prise d'images, le cambrage et l'ondulation latérale de la matière sont calculés simultanément avec une haute précision, pendant que la matière est transportée. La qualité de la matière peut donc être évaluée en temps réduit. Le dispositif de mesure de la qualité selon l'invention n'a donc plus besoin d'être équipé de plusieurs capteurs pour détecter la position des bords. L'espace pour leur installation peut ainsi être réduit.

Selon le second aspect de l'invention, l'ondulation latérale et le cambrage peuvent être calculés de façon simple.

Selon le troisième et le dixième aspects de l'invention, la largeur de la matière peut être mesurée sur la longueur entière de la matière au cours de son acheminement.

De surcroît, il n'est pas nécessaire d'installer un capteur spécialisé pour calculer, respectivement, la largeur, l'ondulation latérale et le cambrage, afin de détecter la position des bords. Il suffit donc de prévoir un espace réduit pour son installation.

Selon le quatrième aspect de l'invention, il est confirmé que l'ondulation latérale, le cambrage et la largeur peuvent être mesurés avec une haute précision.

Selon le cinquième et l'onzième aspects de l'invention, on calcule la distance du bord allant de chacun des points choisis sur chaque bord latéral de la matière, apparus dans les images prises, jusqu'à la ligne de repère correspondante définie sur la longueur de chaque bord la matière, puis, sur la base cette distance calculée, on peut détecter des manques en bords latéraux de la matière.

Selon le sixième et douzième aspects de l'invention, les défauts de surface de la matière sont de surcroît détectés sur la base de la valeur de la luminance des pixels contenus dans les images prises. Il est donc maintenant possible non seulement de calculer la largeur, l'ondulation latérale et le cambrage de la matière, mais aussi de détecter des défauts de surface et des manques sur les bords latéraux de la matière. Ces données sont entrées dans une banque de données et gérées, permettant ainsi de garantir la qualité de la matière et d'améliorer sa configuration pendant les étapes de production.

Selon le septième et le treizième aspects de l'invention, la valeur de l'écart des cylindres de consigne du dispositif de laminage, fixée pour le côté opérateur et pour le côté entraînement, est réglée par commande à action directe "FF", sur la base des mesures réelles de l'ondulation latérale et du cambrage. Par conséquent, le cambrage de la matière est efficacement supprimé, ainsi que les défauts sur sa qualité.

Selon le huitième et le quatorzième aspects de l'invention, les marges à ébarber sont définies sur la base des mesures réelles de l'ondulation latérale et du cambrage. Puis, se basant sur ces marges à ébarber, est modifiée la valeur "EPC" de consigne pour régler la position des bords, afin de régler l'ondulation latérale. On effectue ensuite l'ébarbage. Le cambrage est ainsi efficacement réduit, et les défauts de qualité de la matière peuvent être supprimés.

Description sommaire des dessins

La figure 1 est une diagramme d'installation schématique, montrant les constituants d'un dispositif de mesure de qualité pour une matière sous forme de bande, selon la présente invention.

La figure 2 est une vue schématique en plan, illustrant la disposition des vidéo caméras installées dans le dispositif de mesure de qualité pour la matière sous forme de bande selon la présente invention.

La figure 3 est une diagramme schématisant les étapes d'un processus, illustrant l'ordre de l'opération dans un dispositif d'opération.

La figure 4 est un graphe montrant la distance allant d'un bord latéral d'une tôle d'acier jusqu'à une ligne de repère définie sur la longueur de la tôle d'acier.

La figure 5 est un autre graphe montrant la distance allant d'un bord latéral d'une tôle jusqu'à une ligne de repère définie sur la longueur de la tôle.

La figure 6 est un graphe montrant un décalage de la distance produite entre un point de mesure donné sur un bord de la tôle et la ligne de repère, lorsque la tôle a été acheminée obliquement.

La figure 7 est les graphes illustrant l'opération pour calculer la largeur de la tôle.

La figure 8 est une vue schématique en plan d'un dispositif de laminage.

La figure 9 est une diagramme schématisant les étapes d'un processus, montrant l'ordre de l'opération pour un dispositif de régulation des écarts.

La figure 10 est une vue schématique en plan d'un dispositif d'ébarbage.

La figure 11 est une diagramme schématisant les étapes d'un processus montrant l'ordre de l'opération pour un dispositif de régulation de l'ondulation latérale.

La figure 12 est un graphe montrant la comparaison des résultats de mesure du cambrage d'une tôle, lorsque le cambrage est calculé à partir des mesures obtenues par un dispositif de mesure de la qualité selon l'invention et lorsqu'il est mesuré hors ligne par un dispositif de mesure tridimensionnelle.

La figure 13 est un graphe montrant les résultats de mesure du cambrage, obtenus par un dispositif de mesure de la qualité selon l'invention, mesures étant effectuées trois fois sur les mêmes longueurs (31 m) d'une tôle mince laminée à froid à une vitesse de passe de 12 m/mn.

La figure 14 est une diagramme d'installation schématique montrant les constituants d'un dispositif pour obtention des informations sur les mesures effectuées sur la qualité d'une tôle, connu dans l'art antérieur.

Description des exemples préférés de l'invention

Les exemples de la réalisation de la présente invention sont décrits ci-après en se référant aux dessins.

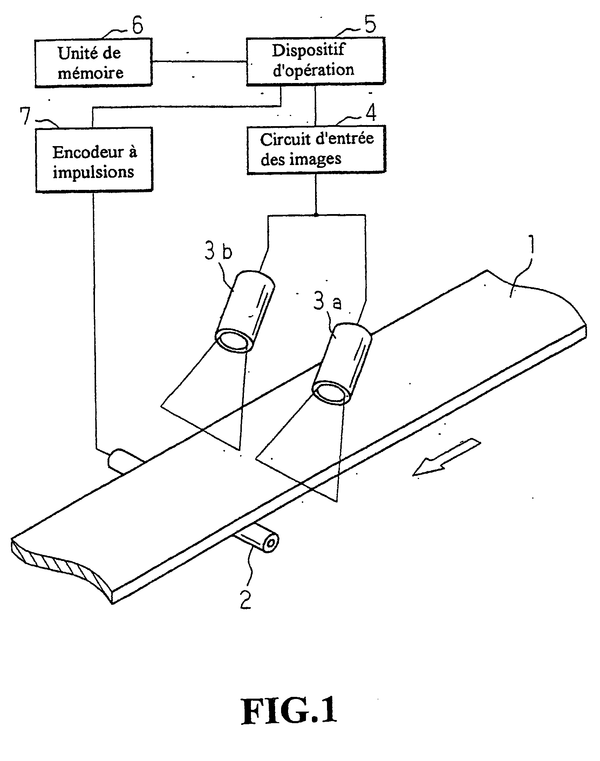

La figure 1 est une diagramme d'installation schématique, montrant les constituants d'un dispositif de mesure de qualité pour une matière sous forme d'une bande (tôle ci-après), selon la présente invention. Dans cette figure, la tôle 1 est acheminée par un rouleau 2 à une vitesse donnée dans la direction de la longueur de la tôle. Le rouleau 2 est relié à un encodeur à impulsions 7, qui alimente en signaux d'impulsion un dispositif d'opération 5, sur la base du nombre des impulsions correspondant à la distance sur laquelle la tôle est transportée.

Deux vidéo caméras 3a, 3b contenant respectivement un dispositif à couplage de charge (Charge Coupled Device, ou CCD) sont installés de façon à pouvoir filmer les deux bords latéraux de la tôle. Les deux vidéo caméras 3a, 3b prennent des images des bords latéraux de la tôle 1 de façon continue, et les images prises alimentent un dispositif d'opération 5 via un circuit d'entrée des images 4. Le dispositif d'opération 5 mémorise ainsi les images prises et entrées par les vidéo caméras 3a, 3b dans une unité de mémoire 6.

Lorsque la tôle 1 est longue, le volume des données stockées dans l'unité de mémoire 6 devient extrêmement important. Les deux vidéo caméras 3a, 3b peuvent être mises en marche d'une façon intermittente, par exemple, environ tous les 10 mm jusqu'à 15 mm, au lieu d'une façon continue.

Le dispositif d'opération 5 utilise une pluralité d'images mémorisées dans l'unité de mémoire 6, et calcule la largeur, l'ondulation latérale et le cambrage de la tôle 1, et détecte des défauts de surface et les manques des bords de la tôle, suivant l'ordre d'opération mentionné ci-après.

Pour assurer la précision des mesures, les conditions suivantes sont respectées:

$$VS >= \{ (VL \times 1000)/60 \} \times \{ 1/ (SL/Kv) \}$$

$$Kv >= 10$$

dans laquelle;

VS: vitesse obturatrice (Hz) des vidéo caméras 3a, 3b;

VL: vitesse maximale de l'acheminement (m/mn) de la tôle 1;

SL: intervalle de mesure (mm) choisi pour obtenir les données sur la position, dans l'information prélevée d'une mesure; et

Kv: étendue dans laquelle la précision a été vérifiée (coefficient)

La luminance LX (Lx) des vidéo caméras 3a, 3b est calculée à partir de la vitesse obturatrice VS selon la formule:

$$LX = KL \times VS$$

dans laquelle, KL: coefficient de conversion (Lx/Hz).

Le coefficient de conversion est de préférence compris entre 5.0 et 7.0, et est avantageusement fixé à 6.0.

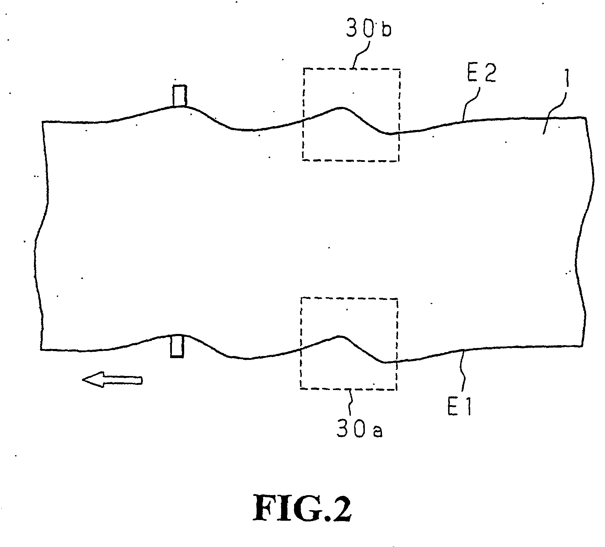

La figure 2 est une vue schématique en plan, illustrant la disposition des vidéo caméras 3a, 3b installées dans le dispositif de mesure de qualité pour une matière sous forme d'une bande (tôle ci-après) selon la présente invention. Dans cette figure, les références 30a, 30b montrent respectivement les étendues dans lesquelles les images sont prises par les vidéo caméras 3a, 3b. Ces étendues 30a et 30b contiennent respectivement les bords latéraux E1 et E2.

Il faut bien définir le premier bord latéral E1 et le second bord latéral E2 de la tôle 1 par rapport aux environnements entourant ces bords, afin d'obtenir les données sur la position des bords latéraux E1, E2 d'une manière précise et stable. Pour ce faire, les environnements suivants sont créés.

(1) une source lumineuse (non représentée dans les figures) est installée au-dessus de la zone centrale de la tôle 1, qui crée une luminance homogène autour des étendues 30a et 30b;

(2) le niveau de la tôle 1 et celui des environnements sont différenciés d'environ 0 à 100 mm;

(3) la couleur des environnements est choisie, de telle sorte que la couleur de la tôle et celle des environnements soient en meilleur contraste, et que la luminance des pixels de la tôle 1 dans les images prises soit plus élevée que celle des environnements. Par exemple, pour une tôle laminée à froid, les environnements sont colorés en noir.

De plus, la résolution de mesures peut être améliorée, en établissant les seuils sur le niveau de fonçage de la couleur, et en calculant les valeurs de mesure à partir du degré d'inclinaison des niveaux de fonçage aux alentours de ces seuils.

Le dispositif de mesure de qualité de la tôle selon l'invention fonctionne comme suit.

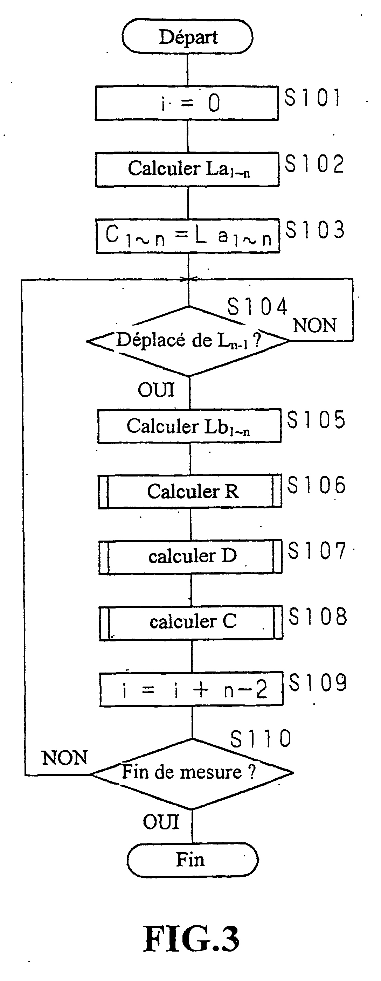

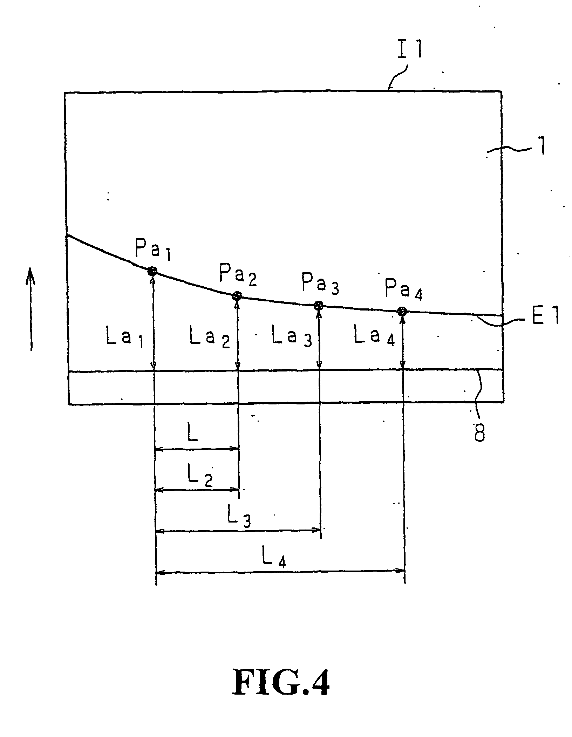

La figure 3 est une diagramme schématisant les étapes d'un processus, illustrant l'ordre de l'opération dans un dispositif d'opération 5, et la figure 4 est une graphe montrant les distances $La_1$ à $La_4$, respectivement allant d'un des bords latéraux E1 de la tôle 1 jusqu'à une des lignes de repère 8 définies le long de la tôle 1.

Dans la figure 4, la référence II indique une image prise par une vidéo caméra 3a. Les références $Pa_1$ à $Pa_4$ indiquent quatre points de mesure prise à chaque intervalle L donnée sur le bord latéral E1 de la tôle 1. La référence 8 indique une ligne de repère définie le long de la tôle 1. Les distances à partir du point $Pa_1$ jusqu'aux points $Pa_2$, $Pa_3$ et $Pa_3$ le long de la tôle 1 sont définies, respectivement, comme $L_2$, $L_3$ et $L_4$.

La ligne de repère 8 peut être définie sur une position arbitraire, si elle est comprise dans l'étendue de l'image prise 30a.

La flèche dans la figure 4 indique la direction de balayage. Dans le dispositif de mesure de qualité selon l'invention, la tôle 1 est balayée seulement sur les tracés comprenant les points de mesure $Pa_1$ à $Pa_4$, si bien que le temps pour obtenir les données sur position est réduit.

En plus des tracés comprenant les points de mesure $Pa_1$ à $Pa_4$, les périphéries de ces tracés peuvent être aussi balayées. Dans ce cas-là, on peut améliorer la précision sur le calcul de la position du bord E1, en s'appuyant sur les résultats de ces balayages.

Le dispositif d'opération 5 extrait, de l'unité de mémoire 6, l'image prise par le vidéo caméra 3a. Le bord latéral E1 de la tôle 1 apparu dans cette image extraite peut être détecté par un moyen connu.

Ensuite, i est amené à zéro dans l'étape S 101 de la figure 3 (i indique le nombre des points de mesure pour le cambrage).

Les points de mesure $Pa_1$ à $Pa_n$ (n = 4 dans le cas présent) sur le bord latéral E1 sont ainsi détectés, et les distances $La_1$ à $La_n$ entre chaque point de mesure et la ligne de repère 8 sont calculées (étape S 102).

Ensuite, le réglage initial (étape S 103) est effectué selon la formule suivante:

$$C_{1 \sim n} = La_{1 \sim n}$$

dans laquelle:

n: nombre des points de mesure dans une image prise;
$C_{1 \sim n}$: cambrage à chaque point de mesure.

Ensuite, sur la base des signaux d'impulsion entrés par l'encodeur à impulsions 7, le dispositif d'opération 5 évalue si la tôle 1 est acheminée par une distance $L_{n-1}$ ($L_3 = 2L$ dans le cas présent) ou non (étape S 104).

Si la tôle est acheminée par distance $L_{n-1}$ dans l'étape S 104, l'opération passe à l'étape S 105 suivante.

Si la tôle n'est pas acheminée par distance $L_{n-1}$ dans l'étape S 104, l'opération sera répétée jusqu'à ce que la tôle soit déplacée par distance $L_{n-1}$.

Après que l'image I1 a été prise, la vidéo caméra 3a prend une image 12 suivante. Le dispositif d'opération 5 exploite cette image subséquente, et calcule les distances $Lb_1 \sim Lb_{11}$ (n = 4 dans le cas présent) allant du bord latéral E1 jusqu'à la ligne de repère 8 (étape S 105).

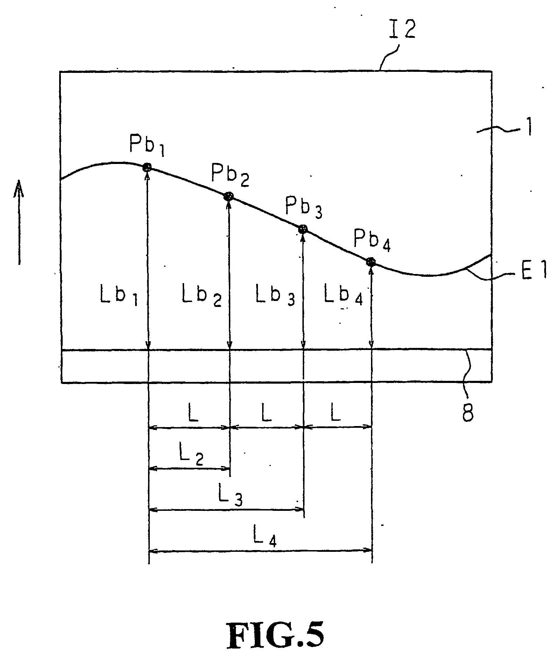

Comme il a été dit supra, la figure 5 montre les distances $Lb_1$ à $Lb_4$ allant du bord latéral E1 de la tôle 1 jusqu'à la ligne de repère.

Dans cette figure, la référence 12 indique une image prise par la vidéo caméra 3a. Cette image I2 a donc été prise après l'image I1.

La référence $Pb_1$ indique un point de mesure, lorsque le point de mesure $Pa_3$ a été déplacé d'une distance $L_3$, suite à l'acheminement de la tôle 1. De même, la référence $Pb_2$ montre un point de mesure lorsque le point de mesure Pa4 a été déplacé d'une distance $L_3$.

Le dispositif d'opération 5 calcule les distances $Lb_1$ à $Lb_4$, allant de chaque point de mesure $Pb_1$ à $Pb_4$ jusqu'à la ligne de repère 8 (étape S 105).

Ensuite, le dispositif d'opération 5 utilise les distances $La_1$ à $La_4$ calculées dans l'étape S 103, et les distances $Lb_1$ à $Lb_4$ calculées dans l'étape S 105, et calcule le décalage, l'ondulation latérale et le cambrage de la tôle 1 (étapes S 106 à 108).

Les étapes S 106 à 108 se déroulent comme suit.

Le dispositif d'opération 5 calcule le décalage R de la tôle par la formule suivante (étape S 106):

$$R_{1 \sim n} = L_{1 \sim n} \times \{(C_{n-1} - C_n) - (Lb_1 - Lb_2)\}/L$$

dans laquelle

$R_{1-n}$: décalage de chaque point de mesure dû à l'acheminement oblique de la tôle;
$L_{1-n}$: longueur comprise entre le point de mesure placé le plus en avant et chaque autre point de mesure, la longueur étant mesurée le long de la tôle, et $L_1$ étant défini comme zéro ($L_1 = 0$); et
L: cadence de mesure.

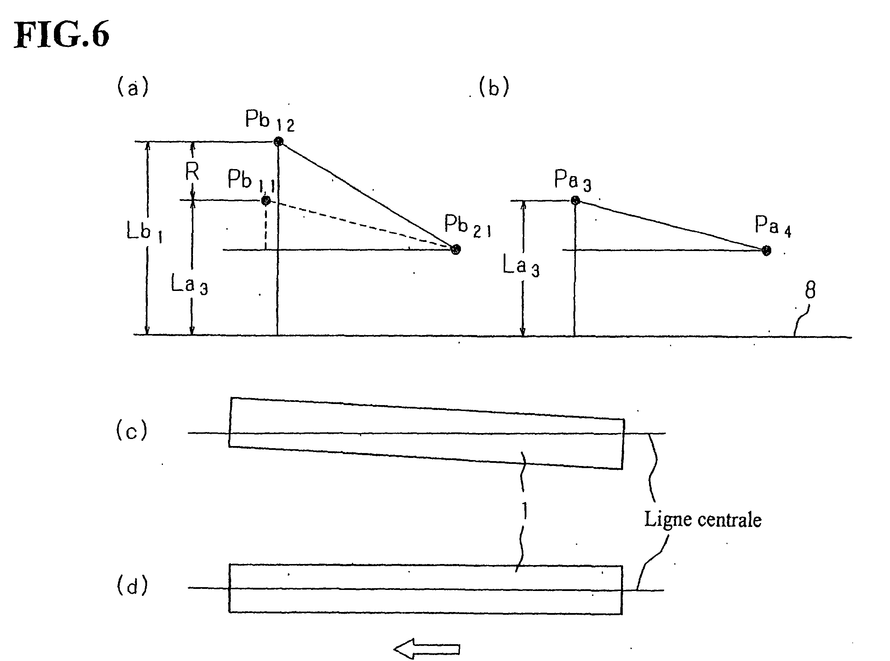

La figure 6 est un graphe montrant le décalage apporté à la distance entre un point de mesure quelconque pris sur le bord latéral E1 de la tôle 1 et la ligne de repère 8, dû à l'acheminement oblique de la tôle 1.

La figure 6 (a) montre la position du point de mesure $Pb_1$, tandis que la figure 6 (b) montre la position des points de mesure $Pa_3$ et $Pa_4$. Les figures 6 (c) et 6 (d) illustrent respectivement un état de l'acheminement de la tôle 1.

Comme il est montré dans la figure 6 (d), quand la tôle 1 est transportée en parallèle à la ligne centrale de l'acheminement, le point de mesure $Pa_3$ est transféré au point de mesure $Pb_{11}$. Par conséquent, le point de mesure $Pb_{11}$ équivaut au point de mesure $Pb_1$.

La figure 6 (c) montre le cas où la tôle 1 est transportée de façon non-parallèle à la ligne centrale. Dans un tel cas de l'acheminement oblique, le point de mesure $Pa_3$ est transféré au point de mesure $Pb_{12}$, et ce dernier équivaut donc au point de mesure $Pb_1$. Par conséquent, la distance $La_3$ reliant $Pa_3$ et la ligne de repère 8 devient la distance $Lb_1$ reliant $Pb_1$ ($Pb_{12}$ dans la figure 6) et la ligne de repère 8. Par rapport au cas où la tôle 1 est acheminée en parallèle, le décalage R peut être obtenu par soustraction de $La_3$ à partir de $Lb_1$. Ce décalage R est donc défini par la distance déviée entre la ligne de repère 8 et le bord latéral E1, causée par l'acheminement oblique de la tôle 1. Cependant, l'ondulation latérale de la tôle, dans ce cas-là, est défini comme dépendant uniquement de l'acheminement oblique.

Dans les présents exemples, le dispositif d'opération 5 calcule le décalage R selon la formule supra.

Ensuite, le dispositif d'opération 5 utilise le décalage R obtenu dans l'étape S 106, et calcule l'ondulation latérale D de la tôle selon la formule qui suit (étape S 107):

$$D_{1\sim n} = Lb_1 - C_{n-1} - R_{1\sim n}$$

dans laquelle:

$D_{1\sim n}$: ondulation latérale pour chaque point de mesure.

Ensuite, le dispositif d'opération 5 utilise l'ondulation latérale D obtenu dans l'étape S 107, et calcule le cambrage C de la tôle selon la formule qui suit (étape S 108):

$$C_{i+n-1 \sim i+2(n-1)} = Lb_{1\sim n} - D_{1\sim n}$$

dans laquelle:

i: nombre de points de mesure pour le cambrage.

Dans le processus décrit ci-dessus, on utilise les images I1 et I2 enregistrées par la vidéo caméra 3a, et l'ondulation latérale D et le cambrage C de la tôle, respectivement obtenus dans l'étape S 107 et l'étape S 108, sont ceux concernant le bord latéral E1 de la tôle 1. L'ondulation latérale D et le cambrage C pour le bord latéral E2 de la tôle 1 sont obtenus selon le même processus, en utilisant le vidéo caméra 3b.

Ensuite, la formule i= i + n - 2 est entrée dans l'étape S 109 Puis, à l'étape S 110, le dispositif d'opération 5 évalue si les mesures sur l'ondulation latérale et le cambrage sont bien terminées ou non. Si elles sont terminées, le processus d'opération est aussi terminé.

Si les mesures ne sont pas encore terminées dans l'étape S 110, l'opération est renvoyée à l'étape S 104.

La largeur de la tôle 1 est calculée comme suit.

Le dispositif d'opération 5 extrait, de l'unité de mémoire 6, les images prises par chacune des vidéo caméras 3a et 3b.

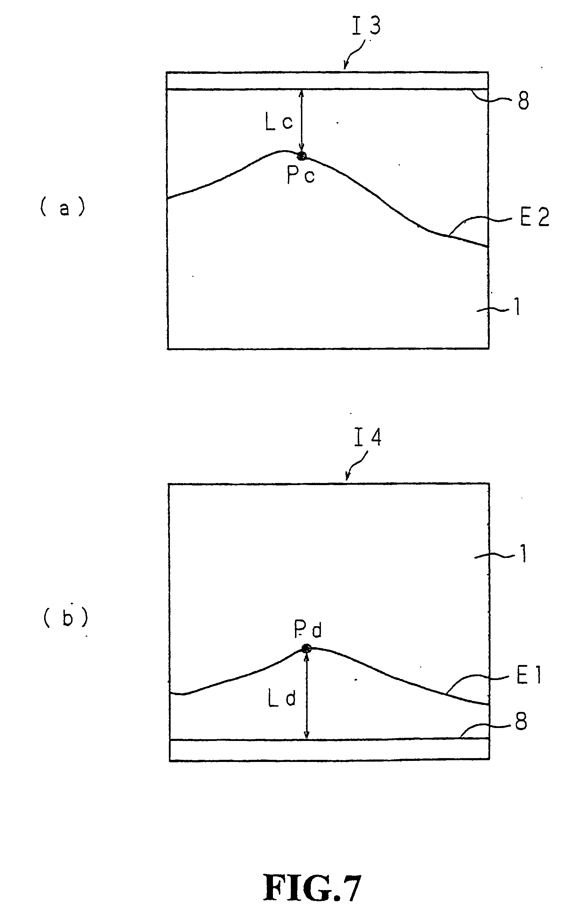

La figure 7 est un graphe montrant comment la largeur de la tôle 1 est calculée. Dans ce graphe, la figure 7 (a) montre une image prise par la vidéo caméra 3b, tandis que la figure 7 (b) montre une image prise par la vidéo caméra 3a. Ces images sont prises en même temps par les vidéo caméras 3a, 3b.

Dans l'image I3 prise par la vidéo caméra 3b (figure 7 (a)), on observe un point de mesure Pc donné sur le bord latéral E2 de la tôle 1, et une mesure Lc allant de ce point de mesure Pc jusqu'à la ligne de repère 8.

De même, dans l'image 14 prise par la vidéo caméra 3a (figure 7 (b)), on observe un point de mesure Pd placé sur le bord latéral E1 de la tôle 1, et une mesure Ld allant de ce point de mesure Pd jusqu'à la ligne de repère 8. Les points de mesure Pc, Pd sont placés sur la même ligne, qui est perpendiculaire à la direction de l'acheminement de la tôle 1.

Le dispositif d'opération 5 calcule la largeur de la tôle selon la formule suivante:

$$W = L - (Lc + Ld)$$

dans laquelle L indique l'espace compris entre la ligne de repère 8 (à côté du bord latéral E1 de la tôle) et la ligne de repère 8 (à côté du bord latéral E2 de la tôle).

Les défauts de surface et les manques des bords de la tôle 1 sont détectés comme suit.

Le dispositif d'opération 5 extrait, de l'unité de mémoire 6, l'image prise par la vidéo caméra 3a, et la luminance des pixels dans l'image extraite est convertie en système binaire. Or, les environnements pour la prise des images étant préparés comme décrits supra, la luminance des pixels attribuée à la tôle 1 dans l'image est plus élevée que celle attribuée aux périphéries. Lorsqu'il y a des défauts de surface de tôle 1 tels que des criques, la lumière venant de la source lumineuse change sa manière de réflexion. Ainsi, la luminance des pixels représentant ces défauts de surface dans l'image prise est plus élevée que celle pour la tôle 1. Par conséquent, lorsqu'il n'y a pas de défaut de surface sur la tôle 1, l'image après mise en système binaire devient noire partout. Par contre, lorsqu'il y a des défauts de surface, seuls les pixels correspondant à ces défauts deviennent blancs. Le dispositif d'opération 5 détecte les pixels blancs, et ainsi saisit des défauts de surface.

Lorsque l'on détecte les manques du bord latéral E1 de la tôle 1, le bord latéral E1 apparu dans l'image est saisi en fonction f (x), et le dispositif d'opération 5 effectue un calcul différentiel sur cette fonction f (x). On évalue ensuite si les valeurs de la différentielle obtenues dépassent un seuil donné préalablement. Lorsqu'elles le dépassent, on estime qu'il y a des manques du bord E1.

Les défauts de surface et les manques du bord E2 sont aussi détectés sur l'image prise par la vidéo caméra 3b.

La largeur, l'ondulation latérale et le cambrage de la tôle 1 sont calculés selon le processus décrit supra, tandis que les défauts de surface et les manques des bords sont détectés comme décrits supra. Puis, la qualité de la tôle 1 est évaluée en répétant ces processus.

Après ces mesures, les données sur la largeur, l'ondulation latérale et le cambrage sont, de préférence, fournies tout de suite au dispositif de laminage et au dispositif d'ébarbage, afin d'effectuer une commande à action directe "FF". En ce qui concerne les défauts de surface et les manques des bords, leur rectification est difficile. Les informations concernées peuvent être utilisées, afin de mettre à l'écart des parties défectueuses et de rechercher des causes et de réaliser l'amélioration, mais le processus d'évaluation requiert un certain temps. Dans les présents exemples, on tient compte des caractéristiques de chaque information traitée et de la capacité de traitement. Ainsi, les mesures et traitements de la largeur, de l'ondulation latérale et du cambrage sont conçus pour être effectués chaque fois que la tôle 1 est déplacée par 1/3 sur l'écran, tandis que ceux des défauts de surface et des manques des bords de la tôle 1 sont effectués à chaque déplacement d'un écran.

Le cambrage est réduit par le méthode suivante.

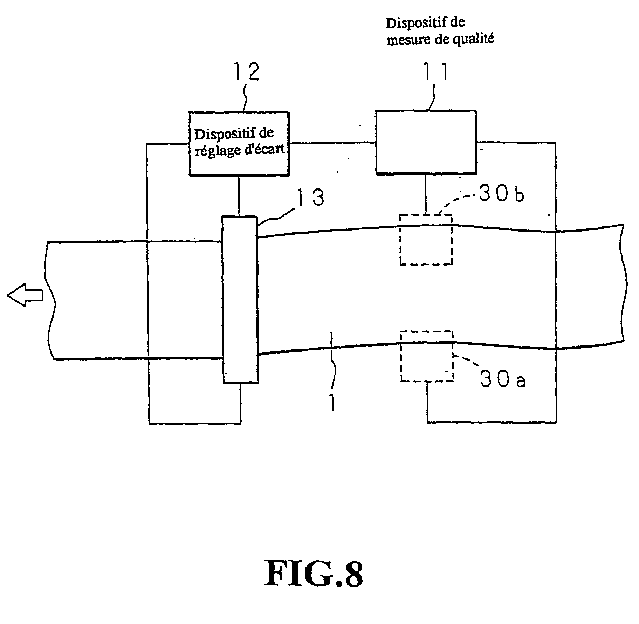

La figure 8 est une vue schématique en plan montrant un dispositif de laminage, qui contient un dispositif de mesure de qualité 11 selon l'invention. A l'entrée des cylindres de laminage 13, la tôle 1 côté opérateur donne l'étendue d'une image 30a, tandis que la tôle 1 côté entraînement donne l'étendue d'une image 30b. Sur la base des informations obtenues sur ces étendues d'une image, le dispositif de mesure de qualité 11 calcule le cambrage du côté opérateur Cpvwi et celui du côté entraînement Cpvdi, et les alimente à un dispositif de réglage d'écart 12. A partir des deux sortes de résultats sur le cambrage, le dispositif de réglage d'écart 12 calcule les écarts des cylindres visés pour le côté opérateur Wgap et pour le côté entraînement Dgap, et effectue une commande à rétroaction "FB".

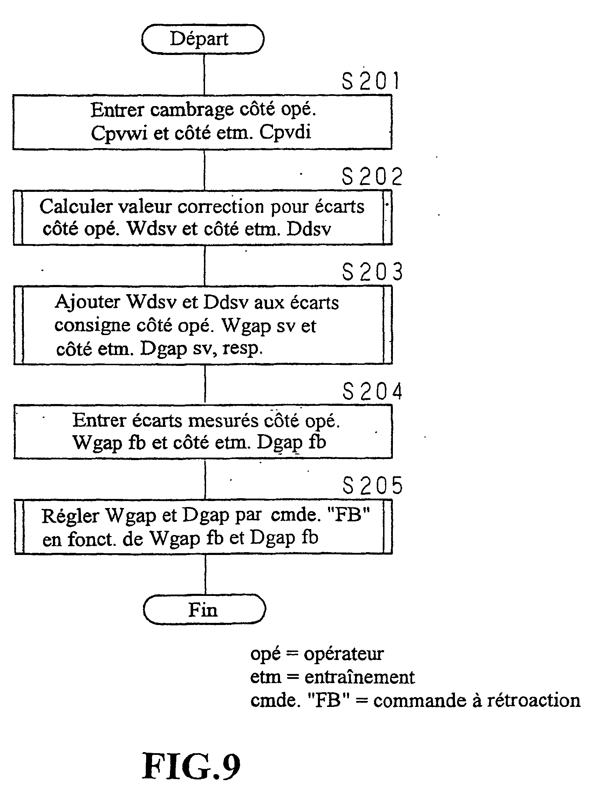

La figure 9 est une diagramme schématisant les étapes d'un processus, montrant l'ordre de l'opération pour le dispositif de réglage d'écarts 12.

D'abord, le cambrage du côté opérateur Cpvwi et celui du côté entraînement Cpvdi sont entrés dans le système à l'étape S 201.

Ensuite, sur la base de ces cambrages Cpvwi et Cpvdi entrés, la valeur pour corriger l'écart des cylindres du côté opérateur Wdsv et celle du côté entraînement Ddsv sont calculées (étape S 202).

Ces dernières Wdsv et Ddsv sont respectivement ajoutées aux écarts de consigne des cylindres Wgap sv et Dgap sv, afin d'obtenir les écarts des cylindres visés Wgap et Dgap, respectivement pour le côté opérateur et pour le côté entraînement (étape S 203).

Ensuite, l'écart des cylindres mesuré côté opérateur Wgap fb et celui côté entraînement Dgap fb sont entrés dans le système à l'étape S 204. Sur la base de ces derniers Wgap fb et Dgap fb, l'écart des cylindres côté opérateur Wgap et celui côté entraînement Dgap sont réglés par commande à rétroaction "FB" (étape S 205).

Dans le dispositif de laminage de l'art antérieur, le cambrage a été déduit sur la base des variations en serrage du laminoir côté opérateur et côté entraînement, puis l'écart des cylindres visé côté opérateur Wgap et celui côté entraînement Dgap ont été calculés.

Selon le dispositif de laminage de l'invention, le cambrage mesuré côté opérateur Cpvwi et celui côté entraînement Cpvdi permettent de corriger l'écart des cylindres de consigne côté opérateur Wgap sv et celui côté entraînement Dgap sv, et ainsi d'obtenir l'écart visé côté opérateur Wgap et celui côté entraînement Dgap, si bien que la formation du cambrage est efficacement supprimée.

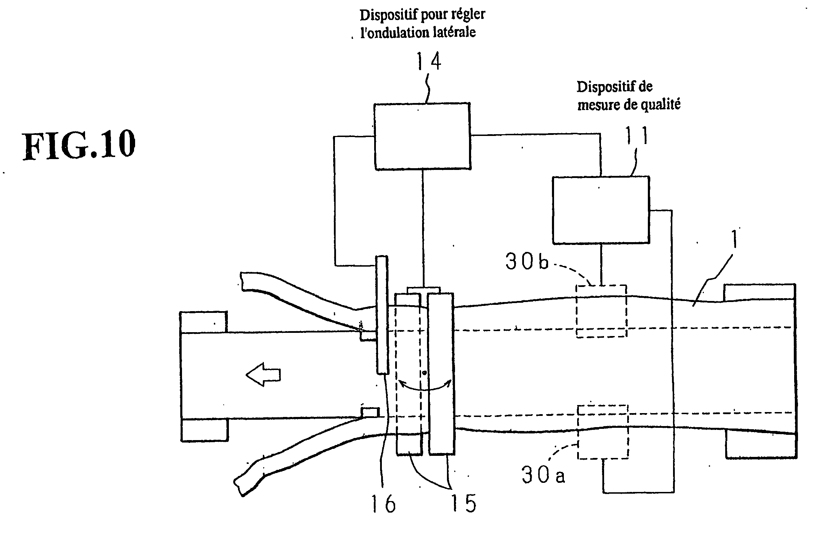

La figure 10 est une vue schématique en plan du dispositif à ébarbage, qui contient un dispositif de mesure de qualité 11 selon l'invention.

Le dispositif d'ébarbage comprend des rouleaux de réglage de l'ondulation latérale 15 et une ébarbeuse des bords 16. Les rouleaux de réglage de l'ondulation latérale 15 peuvent être déplacés vers l'avant et vers l'arrière dans la direction de la tôle 1 pour régler l'ondulation latérale de la tôle 1. En même temps, l'ébarbeuse des bords 16 peut découper les bords latéraux de la tôle 1.

Le dispositif de mesure de qualité 11 obtient les informations à partir des étendues des images 30a, 30b à l'entrée des rouleaux à régler l'ondulation latérale 15. A partir de ces informations, le dispositif 11 calcule le cambrage mesuré côté opérateur Cpvwi et celui côté entraînement Cpvdi, et alimente les résultats de calcul au dispositif pour régler l'ondulation latérale 14. Sur la base de ces résultats de calcul, le dispositif pour régler l'ondulation latérale 14 calcule la valeur "EPC" de consigne pour les rouleaux réglant l'ondulation latérale 15, et effectue une commande à rétroaction "FB".

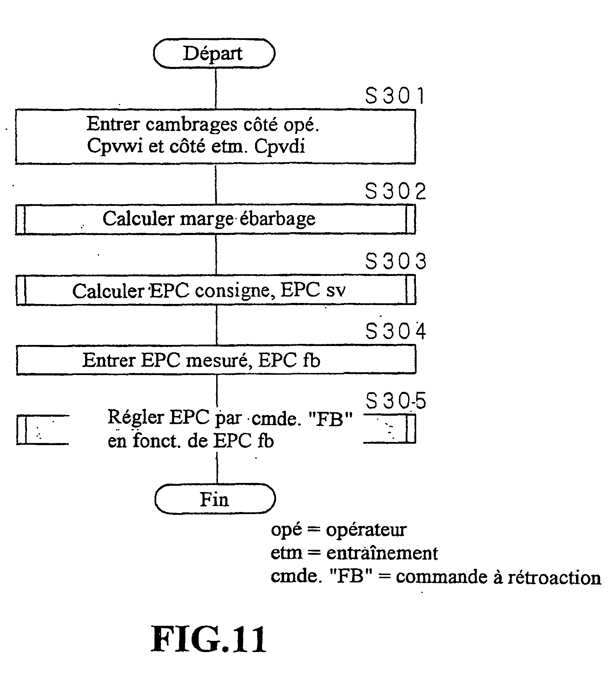

La figure 11 est une diagramme schématisant les étapes d'un processus montrant l'ordre de l'opération pour un dispositif de régulation de l'ondulation latérale.

Le cambrage mesuré côté opérateur Cpvwi et celui côté entraînement Cpvdi sont d'abord entrés dans le système à l'étape S 301.

Puis, sur la base de ces cambrages mesurés Cpvwi, Cpvdi qui sont entrés, les marges à ébarber de la tôle 1 sont calculées (étape S 302).

Sur la base de ces marges, la valeur "EPC" de consigne, EPC sv, est calculée (étape S 303).

La valeur "EPC" mesurée, EPC fb, est ensuite entrée dans le système à l'étape S 304.

Sur la base de la valeur "EPC" mesurée EPC fb reçue, le dispositif "EPC" est réglé par commande à rétroaction "FB" (étape S 305).

Dans le dispositif à ébarber connu, la valeur "EPC" de consigne EPC sv a été fixée. Par contre, le dispositif d'ébarbage selon l'invention règle l'ondulation latérale de la tôle 1, en modifiant la valeur "EPC" de consigne sur la base de la valeur mesurée du cambrage côté opérateur Cpvwi et de celui côté entraînement Cpvdi. La formation du cambrage peut ainsi être supprimée plus efficacement. De plus, l'état (déplacement) de l'ondulation latérale de la tôle 1 est saisi à la sortie de l'ébarbeuse, et, sur la base des informations sur cet état, le dispositif pour l'acheminement ("T/R", etc.) est réglé.

De cette manière, l'acheminement et le bobinage de la tôle 1 peuvent être effectués comme on souhaite.

Exemples chiffrés

L'invention est maintenant présentée avec les chiffres réels.

Une tôle est soumise à une transformation au laser, afin d'obtenir un produit, dont un bord latéral est formé avec une ondulation ayant une cadence de 100 mm et une amplitude de 1 mm. Le cambrage de cette tôle 1 a été ensuite calculé.

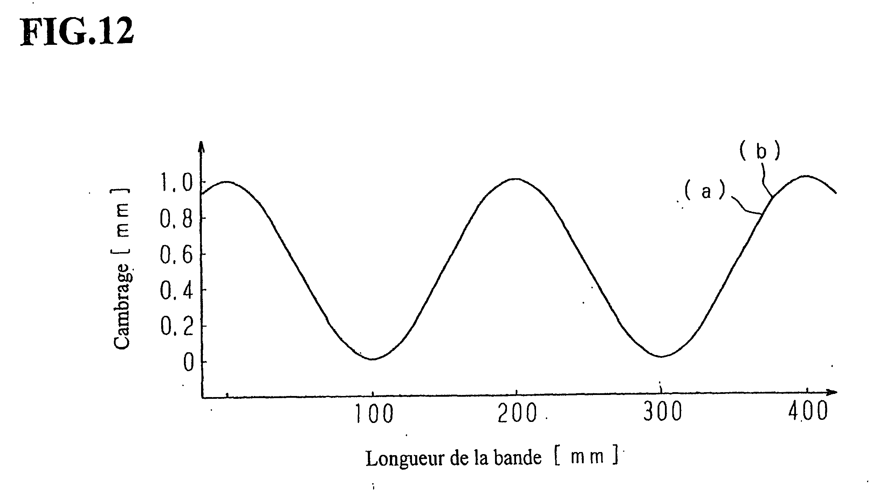

La figure 12 est un graphe montrant la comparaison des résultats de mesure du cambrage d'une tôle, lorsque le cambrage est calculé à partir des mesures obtenues par un dispositif de mesure de la qualité selon l'invention et lorsqu'il est mesuré hors ligne par un dispositif de mesure tridimensionnelle.

Dans la figure 12, la référence (a) indique les résultats calculés par le dispositif de mesure de qualité selon l'invention, tandis que la référence (b) indique ceux mesurés par le dispositif de mesure tridimensionnelle. La différence d'erreur entre les deux résultats est au maximum 0.01 mm.

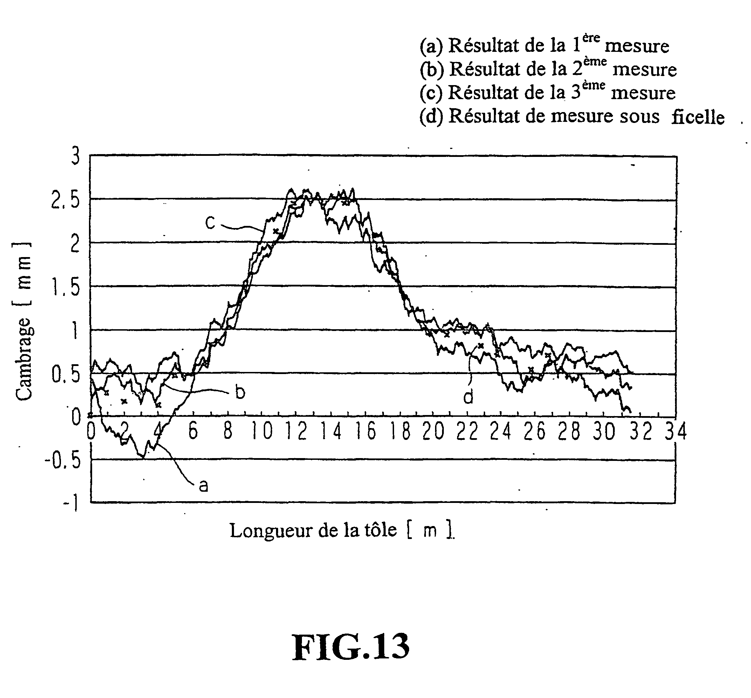

La figure 13 est un graphe montrant les résultats de mesure du cambrage, obtenus par le dispositif de mesure de la qualité selon l'invention, mesures étant effectuées trois fois sur les mêmes longueurs (31 m) d'une tôle mince laminée à froid à une vitesse de passe de 12 m/mn. Par ailleurs, la tôle mince a été mise à plat, et une ficelle a été tendue en travers de la tôle. L'écart vertical entre la ficelle et la tôle a été ensuite mesuré par une jauge d'épaisseur (mesure sous ficelle). Dans la figure 13, les références (a), (b) et (c) indiquent respectivement le premier, le second et le troisième résultats de mesure. La référence (d) indique le résultat de mesure sous ficelle.

La figure 13 montre que, grâce au dispositif de mesure de qualité 11 selon l'invention, le cambrage peut être mesuré dans les limites de $\pm 0.5$ mm avec une bonne reproductibilité.

Selon la méthode et dispositif de mesure de qualité de la tôle 1 de l'invention, celle-ci est soumise aux mesures de la largeur, de l'ondulation latérale et du cambrage, de même qu'à la détection des défauts de surface et des manques des bords, et, de surcroît, sur toute la longueur de la tôle 1 pendant son acheminement. En plus, ces mesures et détections sont effectuées en même temps et avec une haute précision. Pour cette raison, le dispositif de mesure de qualité de l'invention ne requiert pas d'être muni de plusieurs capteurs de détection des bords, comme dans le passé, et peut être installé dans une espace limitée.

De surcroît, selon la méthode de réduction de cambrage de la présente invention, les dispositifs de laminage et d'ébarbage sont soumis à une commande à action directe "FF", sur la base des informations obtenues sur la largeur, l'ondulation latérale et le cambrage de la tôle 1. La tôle ayant une forme très précise peut donc être produite.

Dans les exemples de l'invention, la tôle 1 est utilisée comme une matière sous forme de bande. Cependant, cette dernière n'est pas limitée à une tôle.

Aussi dans les exemples de l'invention, les points de mesure pour chaque image prise sont choisis pour un nombre de 4. Cependant, ce nombre n n'est pas limité à ce chiffre. Il suffit d'être au moins trois.

De même, quant au dispositif d'ébarbage selon la figure 10, la valeur "EPC" de consigne EPC sv de la tôle 1 est obtenue à partir de la valeur mesurée du cambrage côté opérateur et de celle côté entraînement. Mais, la valeur "EPC" de consigne EPC sv peut aussi être obtenue sur la base de la valeur mesurée du cambrage d'un seul côté. Néanmoins, il est préférable d'utiliser les valeurs mesurées des deux côtés, pour que cette valeur de consigne EPC sv soit plus fiable.

Applicabilité industrielle

Selon la méthode et le dispositif de mesure de qualité d'une matière sous forme d'une bande de la présente invention, la largeur, l'ondulation latérale et le cambrage de cette matière sont calculés, et les défauts de surface et les manques des bords sont détectés, sur la base des images prises au moyen de prise d'images pendant que cette matière est acheminé. Ces calculs et détections sont précis, et la qualité de cette matière peut être évaluée en un temps très court. De cette manière, le dispositif de mesure de qualité de l'invention n'a plus besoin d'être équipé de plusieurs capteurs pour la détection de la position des bords comme dans le passé. Le dispositif nécessite donc moins d'espace pour son installation.

Aussi, selon la méthode de réduction de cambrage de l'invention, les dispositifs de laminage et d'ébarbage de la matière sous forme d'une bande sont réglés par commande à action directe "FF", sur la base des informations obtenues sur la largeur, l'ondulation latérale et le cambrage pré-cités, si bien que la matière sous forme d'une bande obtient une configuration très précise. En plus, le dispositif de l'acheminement ("T/R", etc.) est réglé en fonction des informations sur l'état de l'ondulation latérale (déplacement) de la matière à la sortie de l'ébarbeuse, si bien que la matière peut être transportée et bobinée de façon convenable.

**Revendications**

**1.** Méthode de mesure de qualité d'une matière sous forme de bande (1), comprenant un moyen (3a) de prise d'images, avec un intervalle donné, de ladite matière au cours d'acheminement, ledit moyen produisant plusieurs images prises qui permettent de calculer l'ondulation latérale et le cambrage de ladite matière, dans laquelle il y a

une étape pour calculer la distance du bord (E1) pour chacun d'une pluralité de points de mesure (Pa3, Pa4) pris sur un bord latéral de ladite matière qui est saisie dans une image, ladite distance du bord étant mesurée à partir d'une ligne de repère (8) définie le long de ladite matière;

une étape pour détecter la différence entre ladite distance du bord pour chacun desdits points de mesure et la distance du bord correspondante (Pb1, Pb2) mesurée après que ladite matière ait été acheminée par un trajet donné;

une étape pour calculer l'ondulation latérale de ladite matière sur la base des différences; et

une étape pour calculer le cambrage de ladite matière sur la base de ladite ondulation latérale.

2. Méthode de mesure de qualité d'une matière sous forme de bande selon la revendication 1, comprenant:

une étape pour calculer le décalage desdits points de mesure selon la formule représenté par:

$$R_{1\sim n} = L_{1\sim n} \times \{(La_{n-1}-La_n)-(Lb_1-Lb_2)\} / L$$

dans laquelle

n: nombre de points de mesure dans une première image prise;

$R_{1\sim n}$: décalage de chaque point de mesure causé par l'acheminement oblique de ladite matière;

$L_{1\sim n}$: longueur comprise entre le point de mesure placé le plus en avant de la direction de l'acheminement dans ladite première image et chacun des autres points de mesure, ladite longueur étant mesurée le longs de la longueur de ladite matière et $L_1$ étant zéro;

L: cadence de mesure;

$La_{n-1}$: ladite distance du bord mesurée pour le (n-1)ème point de mesure dans ladite première image;

$La_n$: ladite distance du bord mesurée pour le nème point de mesure dans ladite première image;

une étape pour calculer l'ondulation latérale sur la base de la formule représentée par:

$$D_{1\sim n} = Lb_1 - La_{n-1} - R_{1\sim n}$$

dans laquelle:

$D_{1\sim n}$: ondulation latérale pour chaque

point de mesure;

$Lb_1$: ladite distance du bord pour le point de mesure placé le plus en avant de la direction de l'acheminement dans une seconde image de ladite matière , ladite seconde image étant positionnée plus en arrière de l'acheminement de ladite matière par rapport à ladite première image; et

une étape pour calculer le cambrage selon la formule représentée par:

$$C_{i+n-1 \sim i+2(n-1)} = Lb_{1\sim n} - D_{1\sim n}$$

dans laquelle:

i: nombre de points de mesure pour le cambrage, i étant zéro ou un nombre entier.

$Lb_{1\sim n}$: ladite distance du bord pour chaque point de mesure dans ladite seconde image.

3. Méthode de mesure de qualité d'une matière sous forme de bande selon la revendication 1 ou 2, dans laquelle ladite matière comprend deux bords latéraux et est interposé entre deux lignes de repère correspondantes, comprenant:

une étape pour calculer la distance du bord pour chaque point de mesure placé sur chacun desdits bords latéraux, ladite distance du bord étant mesurée à partir de la ligne de repère correspondante; et

une étape pour calculer la largeur de ladite matière selon la formule représentée par:

$$W=L-(Lc+Ld)$$

dans laquelle:

L: espace entre les deux lignes de repère qui s'étendent le long de chacun des bords latéraux correspondant de ladite matière;

Lc: mesure entre un point donné sur un premier bord et la première ligne de repère correspondante;

Ld: mesure entre un point donné sur le second bord, et la seconde ligne de repère correspondante, ledit point du premier bord et celui du second bord étant placées sur la même ligne perpendiculaire à la direction de l'acheminement de ladite matière.

4. Méthode de mesure de qualité d'une matière sous forme de bande selon une quelconque des revendications 1 à 3, dans laquelle ledit moyen de prise des images a une vitesse obturatrice VS et une luminance LX satisfaisant la formule représentée par:

$$VS >= \{(VL \times 1000)/60\} \times \{1/(SL/Kv)\}$$

$$Kv > = 10$$

$$LX = KL \times VS$$

dans laquelle

Kv: étendue dans laquelle la précision a été vérifiée (coefficient); et
KL: coefficient de conversion (Lx/Hz) allant de 5.0 à 7.0.

5. Méthode de mesure de qualité d'une matière sous forme de bande selon une quelconque des revendications 1 à 4, comprenant une étape pour détecter des manques de marge des bords latéraux de ladite matière, sur la base de ladite mesure.

6. Méthode de mesure de qualité d'une matière sous forme d'une bande selon une quelconque des revendications 1 à 5, comprenant une étape pour détecter des défauts de surface de ladite matière, sur la base de la luminance des pixels apparus dans lesdites images prises.

7. Méthode de réduction de cambrage d'une matière sous forme de bande, consistant à régler l'écart des cylindres côté opérateur et côté entraînement par commande à rétroaction "FB", lorsque ladite matière est laminée, **caractérisée en ce qu'**elle comprend:

une étape pour obtenir l'ondulation latérale et le cambrage de ladite matière côté opérateur et côté entraînement, à l'entrée des cylindres, d'après la méthode de mesure de qualité de ladite matière selon une quelconque des revendications 1 à 4;
une étape pour calculer une valeur pour corriger ledit écart des cylindres du côté opérateur et du côté entraînement, sur la base de ladite ondulation latérale et dudit cambrage; et
une étape pour ajouter ladite valeur pour corriger ledit écart des cylindres du côté opérateur et du côté entraînement, à un écart des cylindres de consigne prévu pour les côtés correspondants.

8. Méthode de réduction de cambrage d'une matière sous forme de bande, consistant à régler l'ondulation latérale par commande à rétroaction "FB", lorsque les deux bords latéraux de ladite matière sont ébarbés, **caractérisée en ce qu'**elle comprend:

une étape pour obtenir l'ondulation latérale et le cambrage d'un bord latéral ou deux bords latéraux de ladite matière, d'après la méthode de mesure de qualité de ladite matière selon une quelconque des revendications 1 à 4;
une étape pour calculer une marge à ébarber sur la base de ladite ondulation latérale, dudit cambrage et d'une largeur de ladite matière visée; et
une étape pour calculer une valeur de consigne pour régler l'ondulation latérale sur la base de ladite marge à ébarber.

9. Dispositif propre à la mesure de qualité d'une matière sous forme de bande (1) comprenant un ou plusieurs moyens pour prendre des images, par une intervalle donnée, de ladite matière au cours de son acheminement, lesdites images prises permettant de calculer l'ondulation latérale et le cambrage de ladite matière, dans lequel il y a

un moyen (5) propre à calculer la distance du bord (E1) pour chacun des points de mesure (Pa3, Pa4) pris sur un bord latéral de ladite matière qui est saisie dans une image, ladite distance du bord étant mesurée à partir d'une ligne de repere (8) définie le long de ladite matière;
un moyen (5) propre à détecter la différence entre ladite distance du bord pour chacun desdits points de mesure et la distance du bord correspondante Pb1, Pb2 mesurée après que ladite matière ait été acheminé par un trajet donné;
un moyen (5) propre à calculer l'ondulation latérale de ladite matière sur la base des différences; et
un moyen (5) propre à calculer le cambrage de ladite matière sur la base de ladite ondulation latérale.

10. Dispositif pour la mesure de qualité d'une matière sous forme de bande selon la revendication 9, dans lequel ladite matière comprend deux bords latéraux et est interposé entre deux lignes de repère correspondantes, et ledit dispositif comprend:

un moyen pour calculer la distance du bord pour chacun des points de mesure placé sur chacun desdits bords latéraux, ladite distance du bord étant mesurée à partir de la ligne de repère correspondante; et
un moyen pour calculer la largeur de ladite matière, sur la base d'une mesure entre chacun des deux points et la ligne de repère correspondante, lesdits deux points de mesure étant opposés sur les deux bords latéraux et placés sur la ligne perpendiculaire à la direction de l'acheminement de ladite matière.

11. , Dispositif pour la mesure de qualité d'une matière sous forme de bande selon la revendication 9 ou 10, dans lequel ledit dispositif comprend en plus un moyen pour détecter les manques du bord de ladite matière, sur la base de ladite distance du bord

12. Dispositif pour la mesure de qualité d'une matière sous forme de bande selon une quelconque des revendications 9 à 11, dans lequel ledit dispositif comprend en plus un moyen pour détecter des défauts de surface de ladite matière, sur la base d'une luminance des pixels apparus dans lesdites images.

13. Dispositif de laminage dans lequel l'écart des cylindres côté opérateur et celui côté entraînement peuvent être réglés par commande à rétroaction "FB", ledit dispositif **caractérisé en ce qu'**il comprend:

un dispositif pour la mesure de qualité d'une matière sous forme d'une bande selon la revendication 9 ou 10;
un moyen pour incorporer ladite ondulation latérale et ledit cambrage de ladite matière côte opérateur et côté entraînement à l'entrée des cylindres, obtenus par ledit dispositif pour la mesure de qualité;
un moyen pour calculer une valeur pour corriger l'écart des cylindres côté opérateur et celui côté entraînement sur la base de ladite ondulation latérale et dudit cambrage; et
un moyen pour ajouter ladite valeur pour corriger l'écart des cylindres côté opérateur et celui côté entraînement à l'écart des cylindres de consigne correspondant.

14. Dispositif à ébarber une matière sous forme de bande, dans lequel l'ondulation latérale de ladite matière est réglé par commande à rétroaction "FB" et les deux bords de ladite matière sont ébarbés, ledit dispositif **caractérisé en ce qu'**il comprend:

un dispositif pour la mesure de qualité de ladite matière selon la revendication 9 ou 10;
un moyen pour incorporer l'ondulation latérale et le cambrage d'un bord ou deux bords de ladite matière obtenus par ledit dispositif pour la mesure de qualité;
un moyen pour calculer la marge à ébarber sur la base de ladite ondulation latérale, dudit cambrage et une largeur de ladite matière visée; et
un moyen pour calculer la valeur de consigne pour régler la position des bords en fonction de ladite marge à ébarber.

**Patentansprüche**

1. Verfahren zum Messen der Qualität eines bandförmigen Materials (1), umfassend Mittel (3a) zur Aufnahme von Bildern mit einem gegebenen Intervall des Materials während der Arbeitsvorbereitung bzw. Fertigung, wobei die Mittel mehrere aufgenommene Bilder produzieren, welche es erlauben, die seitliche Wellung und die Krümmung bzw. Durchbiegung des Materials zu berechnen, in welchem es gibt

einen Schritt zum Berechnen des Abstands des Rands (E1) für jeden aus einer Mehrzahl von Meßpunkten (Pa3, Pa4), die auf einem seitlichen Rand des Materials aufgenommen sind, welches in einem Bild abgetastet wird, wobei der Abstand des Rands ausgehend von einer Markierungslinie (8) gemessen wird, die entlang des Materials definiert wird;

einen Schritt, um den Unterschied zwischen dem Abstand vom Rand für jeden dieser Meßpunkte und den Abstand des entsprechenden Rands (Pb1, Pb2) zu detektieren, der gemessen wird, nachdem das Material um einen gegebenen Weg geführt wurde; einen Schritt, um die seitliche Wellung des Materials auf der Basis der Unterschiede zu berechnen; und

einen Schritt, um die Durchbiegung dieses Materials auf der Basis der seitlichen Wellung zu berechnen.

2. Verfahren zum Messen der Qualität eines bandförmigen Materials nach Anspruch 1, umfassend:

einen Schritt, um die Verschiebung bzw. Versetzung der Meßpunkte entsprechend der dargestellten Formel zu berechnen, die dargestellt wird durch:

$$R_{1\sim n} = L_{1\sim n} \times \{(La_{n-1} - La_n) - (Lb_1 - Lb_2)\}/L,$$

in welcher:

n: Anzahl der Meßpunkte in einem ersten aufgenommenen Bild;
$R_{1\sim n}$: Versetzung für jeden Meßpunkt, die durch die schräge bzw. geneigte Führung bzw. Fertigung des Materials bewirkt wird;
$L_{1\sim n}$: Länge zwischen dem Meßpunkt, der am weitesten vorne in der Richtung der Führung in dem ersten Bild angeordnet ist, und jedem anderen Meßpunkt, wobei die Länge entlang der Länge des Materials gemessen wird und $L_1$ null ist;
L: zeitliche Abfolge bzw. Abstand der Messung;
$La_{n-1}$: der Abstand des gemessenen Rands für den (n-1)-ten Meßpunkt in dem ersten Bild;

$La_n$: der Abstand des gemessenen Rands für den n-ten Meßpunkt in dem ersten Bild;

einen Schritt, um die seitliche Wellung auf der Basis der Formel zu berechnen, die dargestellt wird durch:

$$D_{1\sim n} = Lb_1 - La_{n-1} - R_{1\sim n},$$

in welcher:

$D_{1\sim n}$: seitliche Wellung für jeden Meßpunkt;

$Lb_1$: der Abstand des Rands für den Meßpunkt, der am weitesten vorne in der Richtung der Führung bzw. Fertigung in einem zweiten Bild des Materials angeordnet ist, wobei das zweite Bild weiter hinten in der Führung des Materials in bezug auf das erste Bild positioniert ist; und

einen Schritt, um die Durchbiegung entsprechend der Formel zu berechnen, die dargestellt ist durch:

$$C_{i+n-1 \sim i+2(n-1)} = Lb_{1\sim n} - D_{1\sim n}$$

in welcher:

i: Anzahl der Meßpunkte für die Durchbiegung, wobei i null oder eine ganze Zahl ist.

$Lb_{1\sim n}$: der Abstand des Rands für jeden Meßpunkt in dem zweiten Bild ist.

3. Verfahren zum Messen der Qualität eines bandförmigen Materials nach Anspruch 1 oder 2, in welchem das Material zwei seitliche Ränder aufweist und zwischen zwei entsprechenden Markierungslinien zwischengelagert wird, umfassend:

einen Schritt, um den Abstand vom Rand für jeden Meßpunkt zu berechnen, der auf jedem der seitlichen Ränder angeordnet wird, wobei der Abstand vom Rand ausgehend von der entsprechenden Markierungslinie gemessen wird; und

einen Schritt, um die Breite des Materials entsprechend der Formel zu berechnen, die dargestellt wird durch:

$$W = L - (Lc + Ld)$$

in welcher:

L: Abstand zwischen zwei Markierungslinien, die sich entlang von jedem der entsprechenden seitlichen Ränder des Materials erstrecken;

Lc: Maß zwischen einem gegebenen Punkt auf einem ersten Rand der ersten entsprechenden Markierungslinie ist;

Ld: Maß zwischen einem gegebenen Punkt auf dem zweiten Rand und der zweiten entsprechenden Markierungslinie, wobei der Punkt des ersten Rands und derjenige des zweiten Rands auf derselben Linie senkrecht zu der Richtung der Führung des Materials angeordnet sind.

4. Verfahren zum Messen der Qualität eines bandförmigen Materials nach einem der Ansprüche 1 bis 3, in welchem die Bildaufnahmemittel eine Verschlußgeschwindigkeit VS und eine Luminanz LX aufweisen, die die Formel erfüllen, die dargestellt wird durch:

$$VS >= \{(VL \times 1000)/60\} \times \{1/(SL/Kv)\}$$

$$Kv >= 10$$

$$LX = KL \times VS$$

in welcher:

Kv: Weite bzw. Ausmaß, in welcher(m) die Präzision verifiziert wird (Koeffizient); und

KL: Umwandlungskoeffizient (Lx/Hz), der von 5,0 bis 7,0 geht.

5. Verfahren zum Messen der Qualität eines bandförmigen Materials nach einem der Ansprüche 1 bis 4, umfassend einen Schritt, um Fehlertoleranzen der seitlichen Ränder des Materials auf der Basis der Messung zu detektieren.

6. Verfahren zum Messen der Qualität eines bandförmigen Materials nach einem der Ansprüche 1 bis 5, umfassend einen Schritt, um Oberflächenfehler des Materials auf der Basis der Luminanz der Bildpunkte zu detektieren, die in den aufgenommenen Bildern aufscheinen.

7. Verfahren einer Reduktion einer Durchbiegung eines bandförmigen Materials, bestehend in einem Regeln des Abstands von Zylindern auf der Seite einer Betätigung und der Seite einer Mitnahme, durch eine Richtkopplungs- bzw. Feedback-Steuerung bzw. -Regelung "FB", wenn das Material laminiert wird, **dadurch gekennzeichnet, daß** es umfaßt:

einen Schritt, um die seitliche Wellung und die Durchbiegung des betätigungs- und mitnahmeseitigen Materials am Eintritt der Zylinder entsprechend einem Verfahren zum Messen der Qualität des Materials nach einem der Ansprüche 1 bis 4 zu erhalten; einen Schritt, um einen Wert zum Korrigieren des Abstands der Zylinder auf der Seite des Betätigers und auf der Seite der Mitnahme auf der Basis der seitlichen Wellung und der Durchbiegung zu berechnen; und einen Schritt, um diesen Wert zum Korrigieren des Abstands der Zylinder auf der Seite des Betätigers und auf der Seite der Mitnahme zu einem Abstand der Zylinder zur Mitnahme hinzuzufügen, der für die entsprechenden Seiten vorgesehen wird.

8. Verfahren einer Reduktion einer Durchbiegung eines bandförmigen Materials, bestehend aus einem Regulieren der seitlichen Wellung unter Feedback-Steuerung bzw. -Regelung "FB", wenn die zwei seitlichen Ränder des Materials endgratet werden, **dadurch gekennzeichnet, daß** es umfaßt:

einen Schritt, um die seitliche Wellung und die Durchbiegung eines seitlichen Rands oder von zwei seitlichen Rändern des Materials nach einem Verfahren zum Messen der Qualität des Materials nach einem der Ansprüche 1 bis 4 zu erhalten; einen Schritt, um einen zu entgratenden bzw. Entgratungsrand auf der Basis der seitlichen Wellung, der Durchbiegung und der Breite des betrachteten Materials zu berechnen; und einen Schritt, um einen Einstellwert zum Regeln der seitlichen Wellung auf der Basis des zu entgratenden Rands zu berechnen.

9. Vorrichtung, die zur Messung der Qualität eines bandförmigen Materials (1) geeignet ist, umfassend ein oder mehrere Mittel, um Bilder mit einem gegebenen Intervall des Materials im Verlaufe seiner Fertigung bzw. Führung aufzunehmen, wobei die aufgenommenen Bilder es erlauben, die seitliche Wellung und die Durchbiegung des Materials zu berechnen, in welcher es gibt, ein Mittel (5), das zum Berechnen des Abstands des Rands (E1) für jeden der Meßpunkte (Pa3, Pa4) geeignet ist, welche auf einem seitlichen Rand des Materials aufgenommen sind, welche in einem Bild erfaßt sind, wobei der Abstand von dem Rand ausgehend von einer Markierungslinie (8) gemessen ist, die entlang des Materials definiert ist; ein Mittel (5), das zum Detektieren des Unterschieds zwischen dem Abstand vom Rand für jeden dieser Meßpunkte und dem Abstand von dem entsprechenden Rand (Pb1, Pb2) geeignet ist, welcher gemessen ist, nachdem das Material um einen gegebenen Abstand geführt bzw. vorgetrieben wurde; ein Mittel (5), das geeignet ist, um die seitliche Wellung des Materials auf der Basis der Unterschiede zu berechnen; und ein Mittel (5), das zum Berechnen der Durchbiegung des Materials auf der Basis der seitlichen Wellung geeignet ist.

10. Vorrichtung zum Messen der Qualität eines bandförmigen Materials nach Anspruch 9, in welcher das Material zwei seitliche Ränder umfaßt und zwischen zwei entsprechenden Markierungslinien zwischengelagert ist, und wobei die Vorrichtung umfaßt:

ein Mittel zum Berechnen des Abstands vom Rand von jedem der Meßpunkte, die auf jedem der seitlichen Ränder angeordnet sind, wobei der Abstand vom Rand ausgehend von der entsprechenden Markierungslinie gemessen ist; und ein Mittel zum Berechnen der Breite des Materials auf der Basis einer Messung zwischen jedem der Punkte und der entsprechenden Markierungslinie, wobei die zwei Meßpunkte auf den zwei seitlichen Rändern gegenüberliegend sind und auf der Linie senkrecht zu der Richtung des Vortriebs bzw. der Fertigung des Materials angeordnet sind.

11. Vorrichtung zum Messen der Qualität eines bandförmigen Materials nach einem der Ansprüche 9 oder 10, in welcher die Vorrichtung darüber hinaus ein Mittel zum Detektieren von Randfehlern des Materials auf der Basis des Abstands von dem Rand umfaßt.

12. Vorrichtung zum Messen der Qualität eines bandförmigen Materials nach einem der Ansprüche 9 bis 11, in welcher die Vorrichtung darüber hinaus ein Mittel zum Detektieren der Oberflächenfehler des Materials auf der Basis einer Luminanz der Bildpunkte umfaßt, die in den Bildern aufscheinen.

13. Laminiervorrichtung, in welcher der Abstand der Zylinder auf der Seite eines Betätigers und der Seite einer Mitnahme durch eine Rückkopplungs- bzw. Feedback-Steuerung bzw. -Regelung "FB" geregelt werden kann, wobei die Vorrichtung **dadurch gekennzeichnet ist, daß** sie umfaßt:

eine Vorrichtung zum Messen der Qualität eines bandförmigen Materials nach einem der Ansprüche 9 oder 10; ein Mittel, um die seitliche Wellung und die Durchbiegung der betätigungsseitigen und mitnahmeseitigen Materials um Eintritt der Zylinder zu inkorporieren bzw. aufzunehmen, welche durch die Qualitätsmeßvorrichtung erhalten sind;
ein Mittel zum Berechnen eines Werts, um den Abstand der Zylinder auf der Seite des Betätigers und der Seite der Mitnahme auf der Basis der seitlichen Wellung und der Durchbiegung zu korrigieren; und
ein Mittel, um diesen Wert zum Korrigieren des Abstands der Zylinder auf der Seite des Betätigers und der Seite der Mitnahme zu dem Abstand der Zylinder der entsprechenden Einstellung hinzuzufügen.

14. Vorrichtung zum Entgraten eines bandförmigen Materials, in welchem die seitliche Wellung des Materials durch eine Feedback-Steuerung bzw. -Regelung "FB" gesteuert bzw. geregelt ist und die zwei Ränder des Materials entgratet sind, wobei die Vorrichtung **dadurch gekennzeichnet ist, daß** sie umfaßt:

eine Vorrichtung zum Messen der Qualität des Materials nach einem der Ansprüche 9 oder 10;
ein Mittel, um die seitliche Wellung und die Durchbiegung eines Rands oder beider Ränder des Materials zu inkorporieren bzw. aufzunehmen, die durch die Vorrichtung zum Messen der Qualität erhalten sind;
ein Mittel, um das Ausmaß eines Entgratens auf der Basis der seitlichen Wellung, der Durchbiegung und einer Breite des betrachteten Materials zu berechnen; und
ein Mittel, um den Einstellwert zum Regulieren der Position der Ränder als Funktion des zu entgratenden Rands zu berechnen.

## Claims

1. Method for measuring the quality of a material in the form of a strip (1) comprising a means (3a) for taking images, at a given interval, of the said material whilst it is being conveyed, the said means producing several images taken which make it possible to calculate the lateral undulation and the curvature of the said material, wherein there is:

a step for calculating the distance from the edge (E1) for each of a plurality of points (Pa3,Pa4) measured on a lateral edge of the said material which is incorporated in an image, the said distance from the edge being measured from a reference line (8) defined along the said material;
a step for detecting the difference between the said distance from the edge for each of the said measuring points and the corresponding distance from the edge (Pb1,Pb2) measured after the said material has been conveyed along a given path;
a step for calculating the lateral undulation of the said material on the basis of the differences; and
a step for calculating the curvature of the said material on the basis of the said lateral undulation.

2. Method for measuring the quality of a material in the form of a strip according to claim 1, comprising:

a step for calculating the offsetting of the said measuring points according to the formula represented by:

$$R_{1-n}=L_{1-n}\times\{(La_{n-1}-La_n)-(Lb_1-Lb_2)\}/L$$

wherein:

n: number of measuring points in a first image taken;
$R_{1-n}$: offsetting of each measuring point caused by the oblique conveying of the said material;
$L_{1-n}$: length contained between the measuring point placed furthest forward in the direction of conveying in the said first image and each of the other measuring points, the said length being measured along the length of the said material and $L_1$ being zero;
L: measuring rate;
$La_{n-1}$: the said distance from the edge measured for the $(n-1)^{th}$ measuring point in the said first image;
$La_n$: the said distance from the edge measured for the $n^{th}$ measuring point in the said first image;

a step for calculating the lateral undulation on the basis of the formula represented by:

$$D_{1-n}=Lb_1-La_{n-1}-R_{1-n}$$

wherein:

$D_{1-n}$: lateral undulation for each measuring point;
$Lb_1$: the said distance from the edge for the measuring point which is placed furthest forward in the direction of conveying in a second image of the said material, the said second image being positioned further back in the conveying of the said material, relative to the said first image; and

a step for calculating the curvature according to the formula represented by:

$$C_{i+n-1-i+2(n-1)} = Lb_{1-n} - D_{1-n}$$

wherein:

i: number of measuring points for the curvature, i being zero or a whole number;
$Lb_{1-n}$: the said distance from the edge for each measuring point in the said second image.

3. Method for measuring the quality of a material in the form of a strip according to claim 1 or claim 2, wherein the said material comprises two lateral edges and is interposed between two corresponding reference lines comprising:

a step for calculating the distance from the edge for each measuring point placed on each of the said lateral edges, the said distance from the edge being measured from the corresponding reference line; and
a step for calculating the width of the said material according to the formula represented by:

$$W = L - (Lc + Ld)$$

wherein:

L: space between the two reference lines which extend along each of the corresponding lateral edges of the said material;
Lc: measurement between a given point on a first edge and the first corresponding reference line;
Ld: measurement between a given point on the second edge and the second corresponding reference line, the said point of the first edge and that of the second edge being placed on the same line perpendicular to the direction of conveying of the said material.

4. Method for measuring the quality of a material in the form of a strip according to any one of claims 1 to 3, wherein the said means for taking images has a shutter speed VS and brightness LX which comply with the formula represented by:

$$VS \geq \{(VL \times 1000)/60\} \times \{1/(SL/Kv)\}$$

$$Kv \geq 10$$

$$LX = KL \times VS$$

wherein:

Kv: extent to which the precision has been verified (coefficient); and
KL: coefficient of conversion (Lx/Hz) ranging from 5.0 to 7.0.

5. Method for measuring the quality of a material in the form of a strip according to any one of claims 1 to 4, comprising a step for detecting missing parts of margins of the lateral edges of the said material, on the basis of the said measurement.

6. Method for measuring the quality of a material in the form of a strip according to any one of claims 1 to 5, comprising a step for detecting surface faults of the said material, on the basis of the brightness of the pixels which appear in the said images taken.

7. Method for reduction of curvature of a material in the form of a strip, consisting of regulating the spacing of the rollers on the operator side and on the drive side by feedback command "FB", when the said material is rolled, **characterised in that** it comprises:

a step for obtaining the lateral undulation and the curvature of the said material on the operator side and on the drive side, at the input of the rollers, according to the method for measuring the quality of the said material according to any one of claims 1 to 4;
a step for calculating a value in order to correct the said spacing of the rollers on the operator side and on the drive side, on the basis of the said lateral undulation and of the said curvature; and
a step for adding the said value in order to correct the said spacing of the rollers on the operator side and on the drive side, to a set spacing of the rollers designed for the corresponding dimensions.

8. Method for reduction of curvature of a material in the form of a strip, consisting of regulating the lateral undulation by feedback command "FB", when the two lateral edges of the said material are trimmed, **characterised in that** it comprises:

a step for obtaining the lateral undulation and curvature of a lateral edge or two lateral edges of the said material, according to the method for measuring the quality of the said material according to any one of claims 1 to 4;

a step for calculating a margin to be trimmed on the basis of the said lateral undulation, of the said curvature, and of a width of the said material concerned; and

a step for calculating a set value in order to regulate the lateral undulation on the basis of the said margin to be trimmed.

9. Device suitable for measuring the quality of a material in the form of a strip (1), comprising one or a plurality of means for taking images, at a given interval, of the said material whilst it is being conveyed, the said images taken making it possible to calculate the lateral undulation and the curvature of the said material, wherein there is:

a means (5) suitable for calculating the distance from the edge (E1) for each of the points (Pa3,Pa4) measured on a lateral edge of the said material which is incorporated in an image, the said distance from the edge being measured from a reference line (8) defined along the said material;

a means (5) suitable for detecting the difference between the said distance from the edge for each of the said measuring points and the corresponding distance from the edge (Pb1,Pb2) measured after the said material has been conveyed along a given path;

a means (5) suitable for calculating the lateral undulation of the said material on the basis of the differences; and

a means (5) suitable for calculating the curvature of the said material on the basis of the said lateral undulation.

10. Device for measuring the quality of a material in the form of a strip according to claim 9, wherein the said material comprises two lateral edges and is interposed between two corresponding reference lines, and the said device comprises:

a means for calculating the distance from the edge for each of the measuring points placed on each of the said lateral edges, the said distance from the edge being measured from the corresponding reference line; and

a means for calculating the width of the said material, on the basis of a measurement between each of the two points and the corresponding reference line, the said two measuring points being opposite on the two lateral edges and placed on the line perpendicular to the direction of conveying of the said material.

11. Device for measuring the quality of a material in the form of a strip according to claim 9 or claim 10, wherein the said device additionally comprises a means for detecting missing edges of the said material, on the basis of the said distance from the edge.

12. Device for measuring the quality of a material in the form of a strip according to any one of claims 9 to 11, wherein the said device additionally comprises a means for detecting surface faults of the said material, on the basis of the brightness of the pixels which appear in the said images.

13. Rolling device in which the spacing of the rollers on the operator side and on the drive side can be regulated by feedback command "FB", the said device being **characterised in that** it comprises:

a device for measuring the quality of a material in the form of a strip according to claim 9 or claim 10;

a means for incorporating the said lateral undulation and the said curvature of the said material on the operator side and on the drive side, at the input of the rollers, obtained by the said device for measuring the quality;

a means for calculating a value to correct the spacing of the rollers on the operator side and on the drive side, on the basis of the said lateral undulation and the said curvature; and

a means for adding the said value in order to correct the spacing of the rollers on the operator side and on the drive side, to the corresponding set spacing of the rollers.

14. Device for trimming a material in the form of a strip, wherein the lateral undulation of the said material is regulated by feedback command "FB" and the two edges of the said material are trimmed, the said device being **characterised in that** it comprises:

a device for measuring the quality of the said material according to claim 9 or claim 10;

a means for incorporating the lateral undulation and the curvature of one edge or two edges of the said material, obtained by the said device for measuring the quality;

a means for calculating the margin to be trimmed on the basis of the said lateral undulation, of the said curvature, and a width of the said material concerned; and

a means for calculating the set value in order to regulate the position of the edges according to the said margin to be trimmed.

6
Unité de
mémoire

5
Dispositif
d'opération

7
Encodeur à
impulsions

4
Circuit d'entrée
des images

3 b

3 a

1

2

# FIG.1

**FIG.2**

```
        ┌──────────────┐
        │    Départ    │
        └──────┬───────┘
               │
        ┌──────────────┐
        │    i = 0     │  S101
        └──────┬───────┘
               │
        ┌──────────────┐
        │ Calculer La₁₋ₙ│  S102
        └──────┬───────┘
               │
        ┌──────────────┐
        │ C₁~ₙ = L a₁~ₙ │  S103
        └──────┬───────┘
               │
          ╱─────────╲     S104
         ╱  Déplacé  ╲      NON
         ╲ de Lₙ₋₁ ? ╱──────────►
          ╲─────────╱
               │ OUI
        ┌──────────────┐
        │ Calculer Lb₁₋ₙ│  S105
        └──────┬───────┘
               │
        ┌──────────────┐
        │  Calculer R  │  S106
        └──────┬───────┘
               │
        ┌──────────────┐
        │  calculer D  │  S107
        └──────┬───────┘
               │
        ┌──────────────┐
        │  calculer C  │  S108
        └──────┬───────┘
               │
        ┌──────────────┐
        │ i = i + n-2  │  S109
        └──────┬───────┘
               │
          ╱─────────╲     S110
    NON  ╱   Fin de  ╲
  ◄──────╲  mesure ? ╱
          ╲─────────╱
               │ OUI
        ┌──────────────┐
        │     Fin      │
        └──────────────┘
```

Départ

i = 0   S101

Calculer $La_{1\sim n}$   S102

$C_{1\sim n} = L\, a_{1\sim n}$   S103

S104 — Déplacé de $L_{n-1}$ ?   NON / OUI

Calculer $Lb_{1\sim n}$   S105

Calculer R   S106

calculer D   S107

calculer C   S108

$i = i + n-2$   S109

S110 — Fin de mesure ?   NON / OUI

Fin

# FIG.3

**FIG.4**

**FIG.5**

# FIG.6

(a)

(b)

$Pb_{12}$

$R$

$Pb_{11}$

$Pa_3$

$Pb_{21}$

$Pa_4$

$Lb_1$

$La_3$

$La_3$

$8$

(c)

$1$

(d)

Ligne centrale

EP 1 158 267 B1

**FIG.7**

Dispositif de
mesure de qualité

1 2                    1 1

| Dispositif de réglage d'écart |

1 3

30 b

30 a

1

1

**FIG.8**

Départ

S 201

Entrer cambrage côté opé.
Cpvwi et côté etm. Cpvdi

S 202

Calculer valeur correction pour écarts
côté opé. Wdsv et côté etm. Ddsv

S 203

Ajouter Wdsv et Ddsv aux écarts
consigne côté opé. Wgap sv et
côté etm. Dgap sv, resp.

S 204

Entrer écarts mesurés côté opé.
Wgap fb et côté etm. Dgap fb

S 205

Régler Wgap et Dgap par cmde. "FB"
en fonct. de Wgap fb et Dgap fb

Fin

opé = opérateur
etm = entraînement
cmde. "FB" = commande à rétroaction

# FIG.9

FIG.10

Dispositif pour régler
l'ondulation latérale

14

Dispositif de
mesure de qualité

11

30b

1

30a

16    15

```
        ┌──────────────┐
        │    Départ     │
        └──────────────┘
                │                          S301
    ┌───────────────────────────────┐
    │  Entrer cambrages côté opé.    │
    │  Cpvwi et côté etm. Cpvdi      │
    └───────────────────────────────┘
                │                          S302
    ┌───────────────────────────────┐
    ║     Calculer marge·ébarbage    ║
    └───────────────────────────────┘
                │                          S303
    ┌───────────────────────────────┐
    ║  Calculer EPC consigne, EPC sv ║
    └───────────────────────────────┘
                │                          S304
    ┌───────────────────────────────┐
    │   Entrer EPC mesuré, EPC fb    │
    └───────────────────────────────┘
                │                          S305
    ║    Régler EPC par·cmde. "FB"    ║
    ║    en fonct. de EPC fb          ║
                │
        ┌──────────────┐
        │     Fin       │
        └──────────────┘
```

opé = opérateur

etm = entraînement

cmde. "FB" = commande à rétroaction

# FIG.11

## FIG.12

(a) Résultat de la 1<sup>ère</sup> mesure
(b) Résultat de la 2<sup>ème</sup> mesure
(c) Résultat de la 3<sup>ème</sup> mesure
(d) Résultat de mesure sous ficelle

FIG.13

**FIG.14**

Dispositif d'opération ~23

Circuit d'entrée des images ~24

20

20

21

21

22

2

1

EP 1 158 267 B1